# EUROPEAN PATENT APPLICATION

(11) **EP 4 144 995 A1**
(43) Date of publication of application: **08.03.2023**
(21) Application number: 22193322.9
(22) Date of filing: 31.08.2022
(51) Int. Cl.: F04D 25/06, F04D 25/10, F04D 29/40, F04D 29/60, F04F 5/16

(54) **BLOWER**

(30) Priority: 01.09.2021 KR 20210116551
(71) Applicant: LG Electronics Inc., Seoul 07336 (KR)
(72) Inventor: Lee, Kunyoung, Seoul (KR); Ha, Hyunpil, Seoul (KR); Baek, Sangkyun, Seoul (KR); Ku, Myungjin, Seoul (KR)
(74) Representative: Vossius & Partner Patentanwälte Rechtsanwälte mbB

(57) **Abstract**

The present disclosure relates to a blower.

According to the present invention, a blower includes: a base; a case disposed above the base and provided with an inlet and an outlet; a rotating plate disposed below the case and rotatably disposed on the base; an electric wire whose part is exposed to an outside of the base and the other part extends upwards of the rotating plate through the base; and an electric wire holder including an electric wire holder that is fixedly disposed on the rotating plate and fixes one side of the electric wire extending towards of the rotating plate from an inside of the base, in which the base includes an electric wire fixing protrusion that fixes the other side of the electric wire extending from an outside to an inner space of the base and an electric wire guide rib that fixes a partial arrangement of the electric wires whose arrangement is changed in an inner space of the base according to a movement of the rotating plate.

## Description

### [Technical Field]

The present disclosure relates to a blower, and more particularly, to a blower in which a case disposed above a base rotates about the base.

### [Background Art]

A blower is a device that intensively supplies air to a local area.

In order to adjust a wind direction of air discharged from the blower, a main body of the blower needs to rotate, and the blower may be provided with a bearing for supporting the rotation of the main body.

As for the blower, a structure above the base may rotate based on the base disposed on the ground. In this case, a motor for rotating the blower may be mounted on the base to rotate the upper structure.

Korean Patent No. 10-1370267 discloses a structure in which a motor is disposed on a base and a structure disposed above the base rotates. In this structure, when a printed circuit board for controlling an operation of the motor disposed on the base is separately disposed on the base, there is a problem in that the internal structure of the base becomes large.

In this structure, when the printed circuit board for operating the fan is disposed above the base, there is a problem that an additional printed circuit board for operating the motor needs to disposed inside the base. In addition, when the printed circuit board is disposed on the upper structure of the base, there may be a problem that electric wires connected to the motor are twisted.

For the stable rotation of the blower, when an electronically controlled device is disposed on the structure above the base, the arrangement of the electric wires inside the base may be changed. In such a structure, problems such as contact between the electric wires or twisting of the electric wires may occur in the electric wires whose arrangement is changed inside the base. The twisting of the electric wires or the contact between the electric wires may cause malfunction of the blower.

### [Disclosure]

### [Technical Problem]

The present disclosure provides a blower that stably supplies power to an electronic device that is disposed inside a rotating blower.

The present disclosure provides a blower that prevents twisting of electric wires or interference between the electric wires due to rotation of the blower.

The present disclosure provides a blower capable of integrated management of electrical components.

The problems of the present disclosure are not limited to the above-mentioned problems. That is, other problems that are not mentioned may be obviously understood by those skilled in the art from the following specification.

### [Technical Solution]

According to the present disclosure, a blower includes a base, a case disposed above the base and provided with an inlet and an outlet, and a rotating plate disposed below the case and rotatably disposed on the base, so the rotating plate and the case may rotate above the base.

In addition, the blower may include: an electric wire whose part is exposed to an outside of the base and the other part extends upwards of the rotating plate through the base; and an electric wire holder including an electric wire holder that is fixedly disposed on the rotating plate and fixes one side of the electric wire extending upwards of the rotating plate from an inside of the base, thereby stably maintaining the arrangement of the electric wires extending upwards of the base.

The base may include an electric wire fixing protrusion that fixes the other side of the electric wire extending from an outside to an inner space of the base and an electric wire guide rib that fixes a partial arrangement of the electric wires whose arrangement is changed in an inner space of the base according to a movement of the rotating plate, thereby limiting the movement range of the electric wires whose arrangement is changed inside the base.

The base may include a lower body forming the inner space and an upper body disposed above the inner space, and the electric wire guide rib protruding in a direction of the lower body is disposed on a lower surface of the upper body, thereby fixing the partial arrangement of the electric wires.

The electric wire guide rib may include an outer guide rib limiting a radial outward movement of the electric wires, and an inner guide rib spaced apart from the outer guide rib to fix the partial arrangement of the electric wires.

The outer guide rib may form a cutout area in which the electric wires are arranged in an area where the electric wire fixing protrusion is disposed, so an electric wire extending from the outside to the inside of the base may be disposed inside the outer guide rib.

The inner guide rib may include a first inner guide rib spaced apart from the outer guide rib at a regular interval and a second inner guide rib having an enlarged spacing from the outer guide rib, and thus, may have a structure in which the arrangement of the electric wires extending from the outside to the inside of the base is fixed, and the arrangement of the electric wires extending to the electric wire holder is changed.

The second inner guide rib may be disposed to be further spaced apart from the electric wire fixing protrusion than the first inner guide rib, thereby fixing the disposition of the base extending from the outside to the inner space of the base.

The first inner guide rib and the second inner guide rib may be spaced apart from each other in a circumferential direction.

The blower may further include an additional rib disposed between the electric wire fixing protrusion and a center of rotation of the upper plate, thereby preventing the contact between the electric wires whose arrangement is changed in the inner space of the base and the electric wire that extends from the outside to the inside of the base.

The additional rib may extend from one end portion of the outer guide rib, thereby partitioning the electric wire extending from the outside to the inner space of the base and the electric wire connected to the electric wire holder.

The electric wire may include a first electric wire fixed to the outer guide rib and the inner guide rib, and a second electric wire extending from the first electric wire to the electric wire holder, and a length of the second electric wire may be longer than that of the first electric wire, thereby increasing a rotation range of the blower.

An electric wire hole through which the electric wire passes may be formed on one side of the lower body, and the electric wire fixing protrusion may be disposed on the upper body at a position where the electric wire hole is formed, thereby fixing one side of the electric wire extending from the outside to the inside of the base.

The electric wire holder may include an upper board fixed to the rotating plate and having an electric wire through hole through which the electric wire penetrates, a lower board spaced downward from the upper board, and a connecting wall connecting the upper board and the lower board, and an electric wire fixing member for fixing one side of the electric wire is disposed on the lower board, thereby stably maintaining the arrangement of the electric wires arranged above the rotating plate since the electric wire fixing member disposed in the inner space of the base rotates even when the rotating plate rotates.

A fastening rib coupled to the rotating plate is disposed above the upper board, and in the electric wire holder, the upper board is coupled to the fastening part with a fastening member in a state where the fastening part is mounted on the fastening rib, thereby integrally rotating the rotating plate and the electric wire holder.

A shaft bearing supporting the rotation of the rotating plate may be disposed between the rotating plate and the bearing, and the electric wire holder may be fastened to the rotating plate inside the shaft bearing, thereby limiting the movement of electric wire extending upwards of the base.

A blower may include: a base; a case disposed above the base and provided with an inlet and an outlet; a fan disposed inside the case and forming a flow of air from the inlet to the outlet; a rotating plate disposed below the case and rotatably disposed on the base; a driving unit mounted on the rotating plate and in contact with the base to relatively rotate the rotating plate with respect to the base; a control device disposed above the rotating plate and electrically connected to the driving unit or the fan; an electric wire whose part is exposed to an outside of the base and the other part disposed above the rotating plate through the base; and an electric wire holder including an upper body that is fixedly disposed on the rotating plate, and a lower body that is disposed in an inner space of the base to fix one side of the electric wire extending upward of the rotating plate, in which the base may includes an electric wire fixing protrusion for fixing the other side of the electric wire extending from the outside to the inner space of the base, an outer guide rib for limiting a radial outward movement of the electric wire, and an inner guide rib spaced apart from the outer guide rib to fix a partial arrangement of the electric wires, thereby limiting the change in the arrangement of the electric wires disposed inside the base.

The electric wire holder may rotate together with the rotating plate, and an electric wire fixing member for fixing one side of the electric wire may be disposed on the lower board, so the arrangement of the electric wires may be changed in the inner space of the base.

When the rotating plate rotates, a spacing between the electric wire fixing member and the electric wire fixing protrusion may be changed.

The electric wire holder may include an upper board fixed to the rotating plate and having an electric wire through hole through which the electric wire penetrates and a connecting wall having a hollow pillar shape and connecting the upper board and the lower board, and the electric wire may extend upward through an inner space of the connecting wall.

Detailed contents of other exemplary embodiments are described in a detailed description and are illustrated in the accompanying drawings.

### [Advantageous Effects]

A blower of the present disclosure has one or more of the following effects:

First, an area where an arrangement of electric wires is changed due to a rotation of the blower is disposed as an inner space of a base, and an area where electronic devices disposed inside the blower are disposed is disposed above a rotating plate rotating on the base, so that even if the blower rotates, electric wires may be stably connected to the device.

Second, by disposing an electric wire guide rib, which fixes a partial arrangement of electric wires, in an inner space of a base which is an area where the arrangement of electric wires is changed, it is possible to prevent twisting of the electric wires or contact between the electric wires to prevent malfunction of a blower. In addition, by penetrating the electric wires through a center of an electric wire holder, it is possible to prevent the electric wires from twisting by rotation.

Third, it is possible to integrally manage electrical components connected by electric wires by collectively disposing electronic devices above a rotating plate.

The effects of the present invention are not limited to the above-described effects. That is, other effects that are not described may be obviously understood by those skilled in the art from the claims.

### [Description of Drawings]

FIG. 1 is a perspective view of an air clean fan according to an embodiment of the present disclosure.
FIG. 2 is a diagram illustrating operation example 1 of FIG. 1.
FIG. 3 is a diagram illustrating operation example 2 of FIG. 1.
FIG. 4 is a front view of FIG. 1.
FIG. 5 is a plan view of FIG. 1.
FIG. 6 is a right cross-sectional view of FIG. 1.
FIG. 7 is a front cross-sectional view of FIG. 1.
FIG. 8 is a partial exploded perspective view illustrating an inside of a second tower of FIG. 1.
FIG. 9 is a plan view of a cross section taken along line A-A of FIG. 2.
FIG. 10 is a bottom view of a cross section taken along line A-A of FIG. 2.
FIG. 11 is an enlarged view of a lower portion of a longitudinal cross-sectional view of FIG. 1.
FIG. 12 is a partial perspective view of an inside of a case illustrating a filter installation structure.
FIG. 13 is an enlarged view of A of FIG. 11.
FIG. 14 is a perspective view in which a rotating plate and a base are coupled according to an embodiment of the present disclosure.
FIG. 15 is an exploded perspective view of the rotating plate and the base of FIG. 14.
FIG. 16 is a bottom view of the rotating plate according to an embodiment of the present disclosure.
FIG. 17 is a plan view of the base according to an embodiment of the present disclosure.
FIG. 18A is a bottom view of a state in which an upper body of the rotating plate and the base are coupled according to a first embodiment of the present disclosure.
FIG. 18B is a bottom view of a state in which an upper body of the rotating plate and the base are coupled according to a second embodiment of the present disclosure.
FIGS. 19A and 19B are diagrams for disclosing an arrangement of electric wires arranged inside the base according to a rotation of the rotating plate of the present disclosure, in which FIG. 19A is a diagram illustrating an arrangement of electric wires at a first position P1 and FIG. 19B is a diagram illustrating an arrangement of electric wires at a second position P2.
FIG. 20 is a side cross-sectional view for describing a disposition of a driving unit according to an embodiment of the present disclosure.
FIG. 21 is a perspective view of the driving unit according to the embodiment of the present disclosure.
FIG. 22 is a perspective view of the control box according to the embodiment of the present disclosure.
FIG. 23 is a bottom perspective view of FIG. 22.

### [Mode for Disclosure]

Various advantages and features of the present disclosure and methods accomplishing them will become apparent from the following description of embodiments with reference to the accompanying drawings. However, the present disclosure is not limited to the embodiments disclosed herein, but will be implemented in various forms. The embodiments make contents of the present disclosure thorough and are provided so that those skilled in the art can easily understand the scope of the present disclosure. Therefore, the present disclosure will be defined by the scope of the appended claims. Throughout the specification, like reference numerals denote like elements.

Hereinafter, the present disclosure will be described with reference to drawings for describing a blower according to embodiments of the present disclosure.

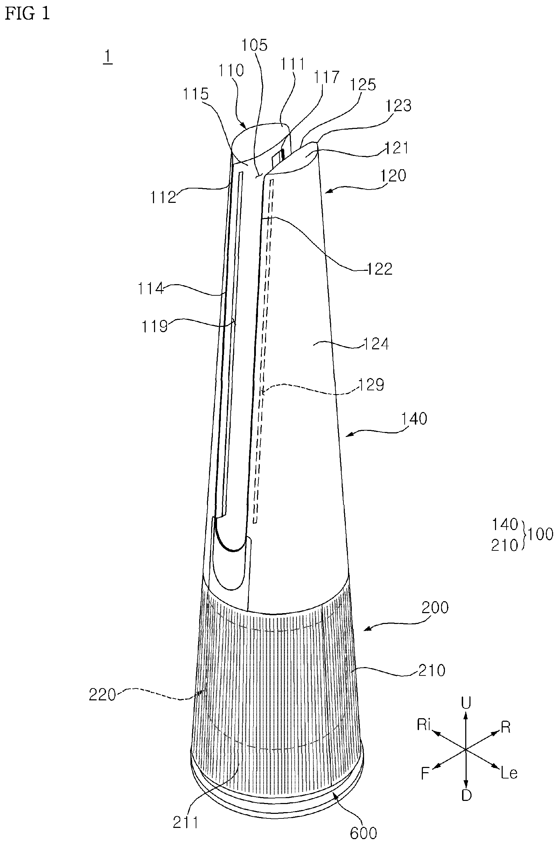

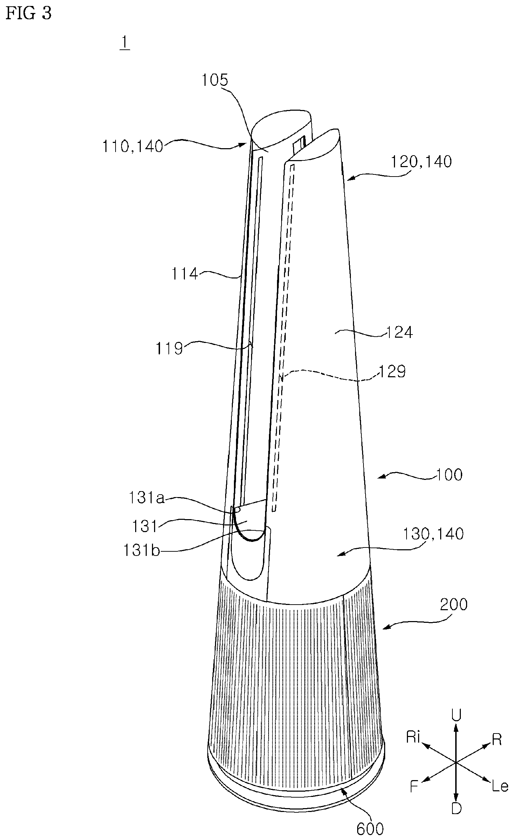

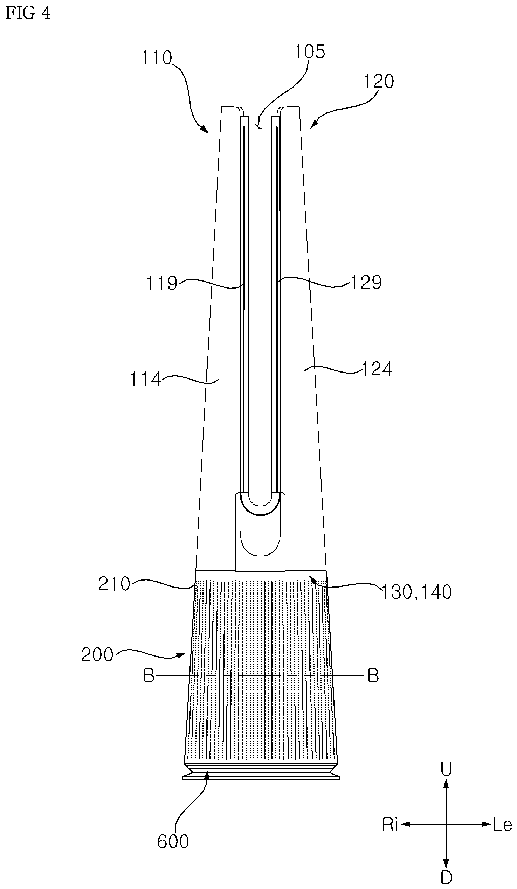

An overall structure of a blower 1 will be first described with reference to FIGS. 1 to 5.

The blower 1 according to an embodiment of the present disclosure includes a case 100 that provides an appearance. The case 100 includes a lower case 210 in which a filter 220 is installed, and a tower case 140 that discharges air through the Coanda effect.

The tower case 140 includes a first tower 110 and a second tower 120 that are separated in the form of two pillars and are spaced apart from each other. Referring to FIG. 1, the first tower 110 may be disposed on the left side, and the second tower 120 may be disposed on the right side.

The first tower 110 and the second tower 120 are spaced apart from each other to form a blowing space 105 between the first tower 110 and the second tower 120.

The front, rear, and upper of the blowing space 105 may be open, and the upper and lower left and right intervals of the blowing space 105 may be formed to be the same.

The tower case 140 including the first tower 110, the second tower 120, and the blowing space 105 may have a truncated cone shape.

Outlets 117 and 127 respectively formed in the first tower 110 and the second tower 120 discharge air to the blowing space 105. When it is necessary to distinguish the outlets, the outlet formed in the first tower 110 is referred to as a first outlet 117, and the outlet formed in the second tower 120 is referred to as a second outlet 127.

The first outlet 117 and the second outlet 127 may extend in an up-down direction in the blowing space 105, and a direction crossing the blowing space 105 is defined as an air discharge direction.

Since the first tower 110 and the second tower 120 are disposed in a left-right direction, the air discharge direction may be formed in a front-rear direction.

That is, the air discharging direction crossing the blowing space 105 may be defined as a first air discharging direction S1 formed in a horizontal direction.

In addition, according to the movement of a Coanda breaker 400 to be described later, the air discharge direction passing through the blowing space 105 may be formed in the up-down direction. In this case, the air discharging direction crossing the blowing space 105 may be defined as a second air discharging direction S2 formed in the up-down direction.

The air flowing in the first air discharging direction S1 is referred to as a horizontal airflow, and the air flowing in the second air discharging direction S2 is referred to as an upward airflow.

It should be understood that the horizontal airflow does not mean that airflows only in a horizontal direction, but means that a flow rate of air flowing in a horizontal direction is greater. Likewise, it should be understood that the upward airflow does not mean that airflows only in an upward direction, but means that a flow rate of air flowing in an upward direction is greater.

An upper gap and a lower gap of the blowing space 105 may be formed to be the same. However, the upper gap of the blowing space 105 may be formed to be narrower or wider than the lower gap.

By forming left and right widths of the blowing space 105 uniformly, the flow of air flowing in the front of the blowing space 105 may be formed more uniformly.

For example, when the width of the upper side is different from the width of the lower side, a flow velocity of the wide side may be formed low, and a deviation of the velocity may be generated based on the vertical direction. When the deviation of the airflow velocity occurs in the vertical direction, the supply amount of clean air may vary depending on the location in the up-down direction where the air is discharged.

The air discharged from the first outlet 117 and the second outlet 127 may be joined in the blowing space 105 and then supplied to a user after.

That is, the air discharged from the first outlet 117 and the air discharged from the second outlet 127 do not individually flow to the user, but are joined in the blowing space 105 and then supplied to the user.

The blowing space 105 may be used as a space in which the discharge air is joined and mixed. In addition, the air behind the blowing space 105 may also flow into the blowing space 105 by the air discharged to the blowing space 105.

Since the discharge air of the first outlet 117 and the discharge air of the second outlet 127 are joined in the blowing space 105, the straightness of the discharge air may be improved. In addition, by joining the discharge air of the first outlet 117 and the discharge air of the second outlet 127 in the blowing space 105, the air around the first tower 110 and the second tower 120 may also be induced to flow along the air discharge direction.

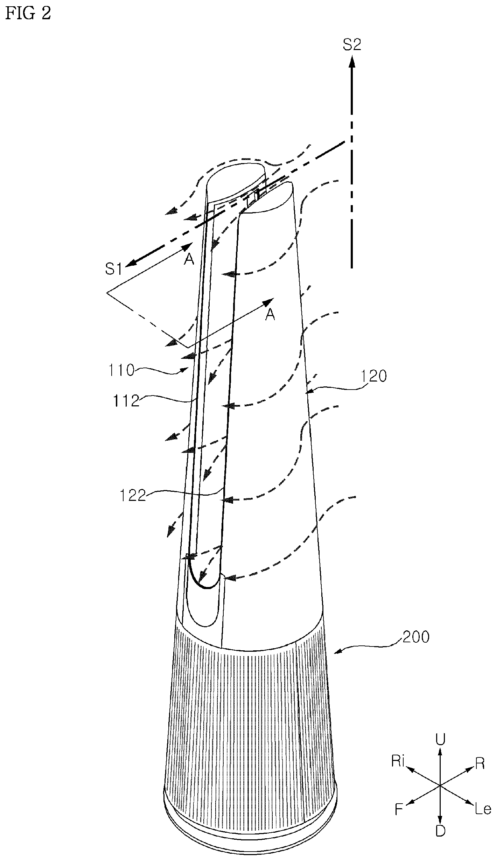

Referring to FIG. 2, the first air discharging direction S1 is formed from the rear to the front, and the second air discharging direction S2 is formed from the lower side to the upper side.

In order to form the second air discharging direction S2, an upper side end 111 of the first tower 110 and an upper side end 121 of the second tower 120 are spaced apart from each other in the left-right direction. That is, the air discharged in the second air discharging direction S2 does not interfere with the case 100 of the blower 1.

In order to form the first air discharging direction S1, a front end 112 of the first tower 110 and a front end 122 of the second tower 120 are spaced apart from each other in the left-right direction, and a rear end 113 of the first tower 110 and a rear end 123 of the second tower 120 are also spaced apart from each other in the left-right direction.

A surface facing the blowing space 105 in the first tower 110 and the second tower 120 is called an inner side surface, and a surface not facing the blowing space 105 is defined as an outer side surface.

An outer side wall 114 of the first tower 110 and an outer side wall 124 of the second tower 120 are disposed to face each other, and an inner side wall 115 of the first tower 110 and an inner side wall 125 of the second tower 120 are formed to face each other.

When it is necessary to separate the inner side walls 115 and 125, the inner side surface of the first tower 110 is defined as the first inner side wall 115, and the inner side surface of the second tower 120 is defined as the second inner side wall 125.

Similarly, when it is necessary to separate the outer side walls 114 and 124 the outer side surface of the first tower 110 is defined as the first outer side wall 114, and the outer side surface of the second tower 120 is defined as the second outer side wall 124.

The first tower 110 and the second tower 120 may be formed in a streamlined shape with respect to the flow direction of the air.

Specifically, the first inner side wall 115 and the first outer side wall 114 may be formed in the streamlined shape with respect to the front-rear direction, and the second inner side wall 125 and the second outer side wall 124 may be formed in the streamlined shape with respect to the front-rear direction.

The first outlet 117 is formed on the first inner side wall 115, and the second outlet 127 is formed on the second inner side wall 125.

A shortest distance between the first inner side wall 115 and the second inner side wall 125 is defined as B0. The outlets 117 and 127 may be located on the rear side of the shortest distance B0.

A separation distance between the front end 112 of the first tower 110 and the front end 122 of the second tower 120 is defined as a first separation distance B1, and a separation distance between the rear end 113 of the first tower 110 and the rear end 123 of the second tower 120 is defined as a second separation distance B2.

The first separation distance B1 and the second separation distance B2 may be formed to be the same. However, the length of any one of the first separation distance B1 and the second separation distance B2 may be formed longer.

The first outlet 117 and the second outlet 127 may be formed between a position where the shortest distance B0 is formed and a position where the second separation distance B2 is formed.

The first outlet 117 and the second outlet 127 may be preferably formed at a position closer to the rear end 113 of the first tower 110 and the rear end 123 of the second tower 120 than the position where the shortest distance B0 is formed.

The closer the outlets 117 and 127 are to the rear ends 113 and 123, the easier it is to control the airflow through the Coanda effect, which will be described later.

The inner side wall 115 of the first tower 110 and the inner side wall 125 of the second tower 120 directly provide the Coanda effect, and the outer side wall 114 of the first tower 110 and the outer side wall 124 of the second tower 120 indirectly provides the Coanda effect.

The inner side walls 115 and 125 directly guide the air discharged from the outlets 117 and 127 to the front ends 112 and 122. That is, the inner side walls 115 and 125 induce the air discharged from the outlets 117 and 127 to form the horizontal airflow.

The indirect flow of air is also generated in the outer side walls 114 and 124 due to the formation of the horizontal airflow due to the Coanda effect generated in the blowing space 105.

The outer side walls 114 and 124 induce the Coanda effect for the above-described indirect flow of air, and guide the above-described indirect airflow to the front ends 112 and 122.

A Coanda breaker 400 to be described later may convert the horizontal airflow passing through the blowing space 105 into the upward airflow, and the upward airflow may flow to an open upper side of the blowing space 105. The upward airflow may prevent the discharge air from directly flowing to the user and activate convection of the indoor air. In addition, the flow rate of the discharged air blown from the blower 1 may be adjusted by adjusting the width at which the air joined in the blowing space 105 is discharged.

A first board slit 119 to which the Coanda breaker 400 moves is formed in the first tower 110 to extend in the up-down direction, and a second board slit 129 to which the Coanda breaker 400 moves is formed in the second tower 120 to extend in the up-down direction. The board slits 119 and 129 may be formed on the inner side walls 115 and 125, respectively, and may be formed to be open toward the inner space of the towers 110 and 120. The board slits 119 and 129 are formed at a position closer to the front end 112 of the first tower 110 and the front end 122 of the second tower 120 than the position where the shortest distance B0 is formed.

By forming the upper and lower lengths of the first outlet 117 and the second outlet 127 longer than the left and right widths B0, B1, and B2 of the blowing space 105, the discharge air of the first outlet 117 and the discharge air of the second outlet 127 may be induced to be joined in the blowing space 105.

The case 100 of the blower 1 includes a lower case 210 having a filter 220 disposed therein, and a tower case 140 disposed above the lower case 210 and supported by the lower case 210. The lower case 210 may form an appearance of the blowing unit 200 including a series of devices for sucking in the outside air and blowing the sucked outside air upward.

The tower case 140 forms the appearance of the first tower 110 and the second tower 120.

The tower case 140 may include a tower base 130 connecting the first tower 110 and the second tower 120, and the tower base 130 may be assembled to the lower case 210. The tower base 130 may be manufactured integrally with the first tower 110 and the second tower 120.

Unlike the present embodiment, the first tower 110 and the second tower 120 may be directly assembled to the lower case 210 without the tower base 130, or may be integrally manufactured with the lower case 210.

The lower case 210 forms a lower portion of the blower 1, and the tower case 140 forms an upper portion of the blower 1. A filter 220 for filtering out foreign substances contained in the air introduced through an air inlet 211 formed along an outer circumferential surface of the lower case 210 may be disposed inside the lower case 210.

The blower 1 may suck ambient air through the air inlet 211 formed in the lower case 210, filter air sucked from the filter 220, and discharge the filtered air from the tower case 140. The tower case 140 may discharge air at a position higher than the lower case 210.

The blower 1 may have a columnar shape whose diameter decreases toward an upper portion, and the blower 1 may have a conical or truncated cone shape as a whole. When a cross section becomes narrower toward the upper side, there is an advantage in that a center of gravity is lowered, and the risk of overturning due to external impact decreases. However, unlike the present embodiment, the cross section does not need to be in a form that becomes narrower toward the upper side.

For the convenience of assembly, the lower case 210 and the tower case 140 may be manufactured and assembled as separate parts. However, unlike the present embodiment, the lower case 210 and the tower case 140 may be integrated. For example, the base case and the tower case may be manufactured in the form of a front case and a rear case in which they are integrated, and then assembled.

The lower case 210 may be formed to have a gradually decreasing diameter toward an upper end, and the tower case 140 may also be formed to have a gradually decreasing diameter toward the upper end.

The outer side surfaces of the lower case 210 and the tower case 140 may form a continuous surface. The lower end of the tower base 130 and the upper end of the lower case 210 are in close contact with each other, and the outer side surface of the tower base 130 and the outer side surface of the lower case 210 may form a continuous surface. To this end, a diameter of the lower end of the tower base 130 may be formed to be the same as or slightly smaller than that of the upper end of the lower case 210.

The lower case 210 and the tower case 140 are rotated in a circumferential direction by a driving unit 700 disposed below the lower case 210. The driving unit 700 may rotate the entire blower 1 body including the case 100, the blowing unit 200, and the towers 110 and 120. When the blower 1 rotates by the driving unit 700, the direction of the horizontal airflow discharged from the blower 1 through the blowing space 105 may be changed.

The tower base 130 distributes the filtered air supplied from the inside of the lower case 210, and provides the distributed air to the first tower 110 and the second tower 120.

The tower base 130 connects the first tower 110 and the second tower 120, and the blowing space 105 is formed above the tower base 130.

The outlets 117 and 127 are formed above the tower base 130, and the upward airflow and horizontal airflow are formed above the tower base 130.

In order to minimize friction with air, an upper side surface 131 of the tower base 130 may be formed as a curved surface. The upper side surface 131 may be formed in a downward concave curved shape, and may be formed to extend in the front-rear direction. One side 131a of the upper side surface 131 may be connected to the first inner side wall 115, and the other side 131b of the upper side surface 131 may be connected to the second inner side wall 125.

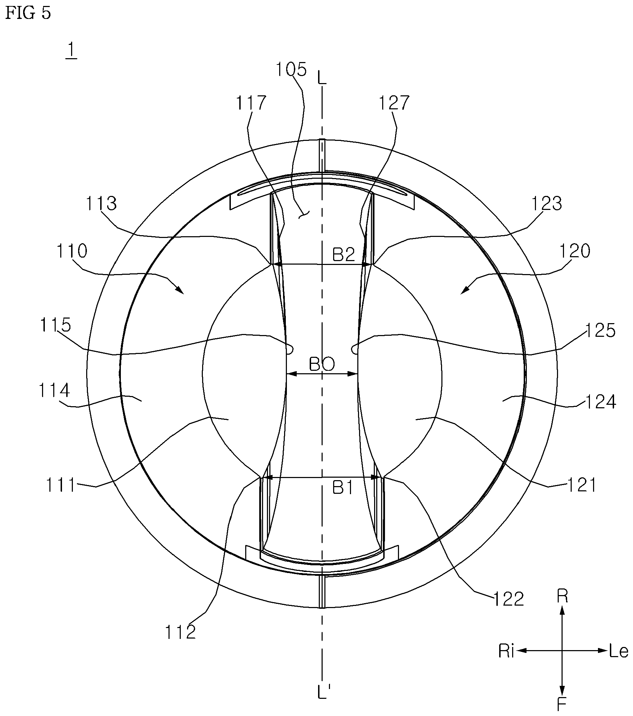

When viewed from a top view with reference to FIG. 5, the first tower 110 and the second tower 120 may be symmetrical left and right based on a center line L-L'. The first outlet 117 and the second outlet 127 may be formed to be symmetrical left and right with based on the center line L-L'.

The center line L-L' is an imaginary line between the first tower 110 and the second tower 120, is formed in the front-rear direction in this embodiment, and is formed to pass through the upper side surface 131.

Unlike the present embodiment, the first tower 110 and the second tower 120 may be formed in an asymmetrical shape. However, when the first tower 110 and the second tower 120 are symmetrically disposed with respect to the center line L-L', the flow is uniformly distributed in the blowing space 105, which makes it easier to control the horizontal airflow and the upward airflow.

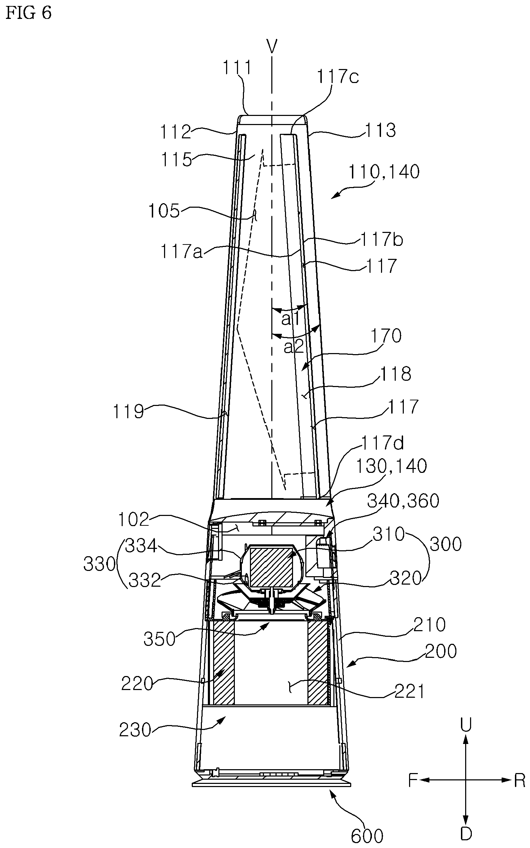

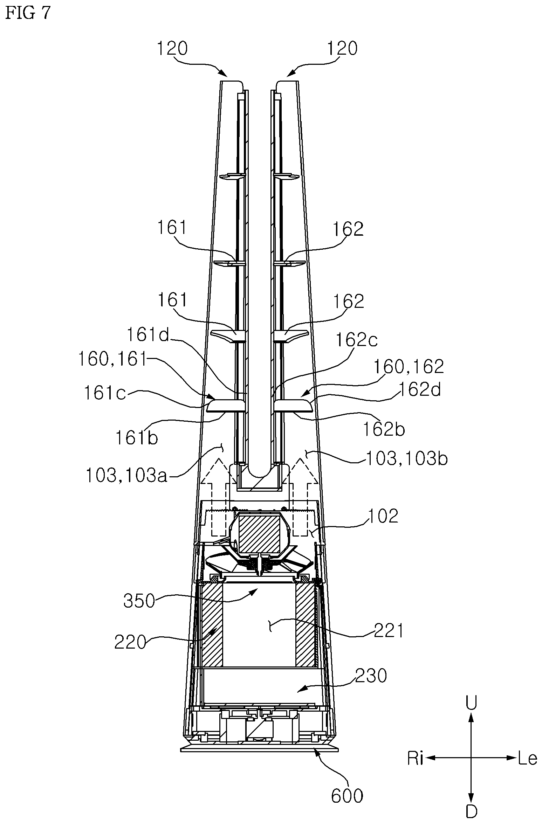

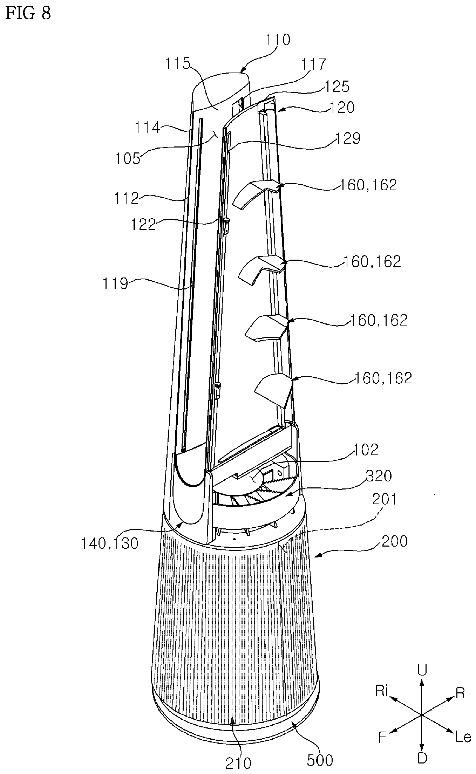

Hereinafter, the internal structure of the blower 1 will be described with reference to FIGS. 6 to 8.

The blower 1 includes a filter 220 that is disposed inside the case 100 and a fan device 300 that is disposed inside the case 100 to make the air sucked through the air inlet 211 flow to the outlets 117 and 127. The filter 220 and the fan device 300 may be disposed inside the lower case 210.

The lower case 210 may be formed in a truncated cone shape, and an upper side thereof is open. The blowing unit 200 including the filter 220 and the fan device 300 includes a lower case 210 that is disposed to surround the filter 220 and the fan device 300, and a plurality of air inlets 211 for communicating the inner and outer sides are formed along a circumferential direction of the lower case 210.

The lower case 210 may be formed in a truncated cone shape with upper and lower sides open. The lower case 210 may be manufactured by being separated into two parts, and the two parts may be assembled to form the above-described truncated cone shape. The two parts may be divided into a front case (not illustrated) separated to the front side of the blower 1 and a rear case (not illustrated) separated to the rear side, and the filter 220 disposed inside the lower case 210 may be withdrawn by separating any one of the two parts.

The filter 220 may be formed in a cylindrical shape having a hollow 221 extending in the up-down direction therein, and the outer side surface of the filter 220 may face the air inlet 211.

The external air of the blower 1 flows by passing through the inside of the filter 220 from the outside of the filter 220, and in this process, foreign substances or harmful gases in air may be removed.

The fan device 300 may be disposed above the filter 220, and may blow air passing through the filter 220 to the first tower 110 and the second tower 120.

The fan device 300 includes a fan housing 360, a fan motor 310 disposed inside the fan housing 360, and a fan 320 rotating by the fan motor 310.

The fan motor 310 may be disposed above the fan 320, and a motor shaft of the fan motor 310 may be coupled to the fan 320 disposed below. A motor housing 330 in which the fan motor 310 is installed may be disposed above the fan 320.

The motor housing 330 may have a shape that surrounds the entire fan motor 310, and since the motor housing 330 surrounds the entire fan motor 310, flow resistance with air flowing from the lower side to the upper side may be reduced. Unlike the present embodiment, the motor housing 330 may be formed in a shape that surrounds only the lower portion of the fan motor 310.

The motor housing 330 may include a lower motor housing 332 and an upper motor housing 334. At least one of the lower motor housing 332 and the upper motor housing 334 may be coupled to the case 100, and the lower motor housing 332 may be coupled to the case 100. The fan motor 310 may be installed above the lower motor housing 332, and then covered with the upper motor housing 334 to surround the fan motor 310.

The motor shaft of the fan motor 310 passes through the lower motor housing 332 and may be assembled to the fan 320 disposed at the lower side.

The fan 320 may include a hub to which the motor shaft of the fan motor 310 is coupled, a shroud spaced apart from the hub, and a plurality of blades connecting the hub and the shroud.

The air that has passed through the filter 220 is sucked into the shroud, and then flows by being pressurized by the rotating blade. The hub is disposed above the blade, and the shroud is disposed below the blade. The hub may be formed in a downward concave bowl shape, and a lower portion of the lower motor housing 332 may be partially inserted into the hub.

The fan 320 may use a four-flow fan. The four-flow fan sucks air in the center of the rotation shaft and discharges air in a radial direction, but the discharged air is inclined with respect to an axial direction.

Since the entire air flow flows from the lower side to the upper side, when air is discharged in a radial direction like a general centrifugal fan, a flow loss due to the change in the flow direction occurs greatly.

The four-flow fan may minimize the flow loss of air by discharging air upward in the radial direction.

A diffuser 340 may be disposed above the fan 320, and the diffuser 340 guides a flow of air by the fan 320 in an upward direction.

The diffuser 340 serves to further reduce a radial component in the flow of air blown from the fan 320 and enhance an upward direction air flow component.

The fan housing 360 is formed in a cylindrical shape, and the upper and lower sides are respectively open. The diffuser 340 may be disposed on the open upper side of the fan housing 360. The motor housing 330 may be disposed between the diffuser 330 and the fan 320.

In order to minimize the installation height of the motor housing in the up-down direction, the lower end of the motor housing 330 may be inserted into the fan 320 and overlap the fan 320. Also, the upper end of the motor housing 330 may be inserted into the diffuser 340 and overlap the diffuser 340. The lower end of the motor housing 330 may be disposed higher than the lower end of the fan 320, and the upper end of the motor housing 330 may be disposed lower than the upper end of the diffuser 340.

In order to optimize the installation position of the motor housing 330, the upper side of the motor housing 330 may be disposed inside the tower base 130, and the lower side of the motor housing 330 may be disposed inside the lower case 210. Unlike the present embodiment, the motor housing 330 may be disposed inside the tower base 130 or the lower case 210.

A suction grill 350 may be disposed inside the lower case 210. The suction grill 350 blocks a user's finger from entering the fan 320 when the filter 220 is separated. The suction grill 350 may be disposed below the fan housing 360. The suction grill 350 may be integrally manufactured with the fan housing 360 or may be manufactured and assembled as a separate component from the fan housing 360.

The suction grill 350 may be manufactured in a structure through which air may pass, and the suction grill 350 may be manufactured in a shape such as a grid, a circle, or the like.

The filter 220 may be disposed below the suction grill 350, and the fan 320 may be disposed above the suction grill 350. The suction grill 350 is formed with a plurality of through-holes in the up-down direction so that air can flow.

Inside the case 100, the space between the suction grill 350 and the outlets 117 and 127 is defined as a ventilation space 102. The inner space of the first tower 110 and the second tower 120 in which the outlets 117 and 127 are formed inside the case 100 is defined as the discharge space 103. The discharge space 103 may be divided into a first discharge space 103a meaning an inner space of the first tower 110 and a second discharge space 103b meaning an inner space of the second tower 120.

The external air of the blower 1 flows into a filter hollow 221 through the air inlet 211, and then passes through the blowing space 102 and is discharged to the outside of the blower 1 through the outlets 117 and 127 via the ventilation space 102 and the discharge space 103.

A substrate housing 230 in which control devices 232 and 233 are accommodated may be disposed below the filter 220. The filter 220 may be disposed above the substrate housing 230, and may be seated on an upper surface of the substrate housing 230.

A space 230s for accommodating the control devices 232 and 233 is formed in the substrate housing 230. The control devices 232 and 233 may be divided into a first control device 232 that controls the operation of the driving unit 700 and the driving of the Coanda breaker 400 and a second control device 233 that controls the driving of the fan device 300.

At least a portion of the driving motor 710 may be disposed in the inner space 230s of the substrate housing 230. The driving motor 710 may rotate within the substrate housing 230. The control devices 232 and 233 and the driving motor 710 are disposed above the rotating plate 500. Accordingly, the control devices 232 and 233 and the driving motor 710 may rotate together with the rotating plate 500.

Since the control devices 232 and 233 and the driving motor 710 are electrically connected and disposed together in the inner space 230s of the substrate housing 230, the integrated management of electrical components may be achieved.

The driving unit 700 for rotating the blower 1 in the circumferential direction may be disposed below the substrate housing 230. The driving unit 700 may rotate a lower case 210, a substrate housing 230, a filter 220, a fan device 300, a first tower 110, and a second tower 120 in the circumference direction. The driving unit 700 may simultaneously rotate all structures disposed in the ventilation space 201 inside the lower case 210 and all structures disposed inside the tower case 140.

The discharge space 103 may be provided with an air guide 160 for switching the flow direction of air flowing upward to a horizontal direction. A plurality of air guides 160 may be disposed to be vertically spaced apart from each other.

The air guide 160 may switch the flow direction of the air flowing from the lower side to the upper side to the horizontal direction, and the air with the switched flow direction may be discharged to the outside of the blower 1 through the outlets 117 and 127.

When it is necessary to distinguish the air guides, a guide disposed inside the first tower 110 may be referred to as a first air guide 161, and a guide disposed inside the second tower 120 may be referred to as a second air guide 162.

When viewed from the front, the first air guide 161 may be coupled to the inner side wall 115 and/or the outer side wall 114 of the first tower 110.

In order to guide the air flowing downward to the first outlet 117, the first air guide 161 may have an upward convex curved surface in which the front side is lower than the rear side.

A rear end 161b of the first air guide 161 may be disposed adjacent to the first outlet 117 and may be connected to the rear end 113 of the first tower 110.

At least a portion of a left end 161c of the first air guide 161 may be in close contact with or coupled to the left wall 114 of the first tower 110. At least a portion of a right end 161d of the first air guide 161 may be in close contact with or coupled to the right wall 115 of the first tower 110.

Since the second air guide 162 is formed to be symmetrical left and right with respect to the first air guide 161, the description of the second air guide 162 may be equally applied to the description of the first air guide 161. Specifically, the rear end 161b of the first air guide 161 may correspond to the rear end of the second air guide 162b, the left end 161c of the first air guide 161 may correspond to the left end of the second air guide 162c, and the right end 161d of the first air guide 161 may correspond to the right end 162d of the second air guide 162.

The first outlet 117 is formed between the front end 112 and the rear end 113 of the first tower 110, and is formed close to the rear end 113. The air discharged from the first outlet 117 may flow along the first inner side wall 115 by the Coanda effect, and may flow toward the front end 112.

The first outlet 117 includes a first border 117a that forms an edge on the air discharge side (front end in the present embodiment), a second border 117b that forms an edge on a side (rear end in the present embodiment) opposite to the air discharge side, an upper border 117c that forms an upper edge of the first outlet 117, and a lower border 117d that forms a lower edge of the first outlet 117.

The first border 117a and the second border 117b may be formed parallel to each other, and the upper border 117c and the lower border 117d may be formed parallel to each other.

The first border 117a and the second border 117b may be inclined in a vertical direction V, and the rear end 113 of the first tower 110 may also be inclined in the vertical direction V.

An inclination a1 of the first border 117a and the second border 117b in the vertical direction V may be formed at 4°, and an inclination a2 of the rear end 113 may be formed at 3°. That is, the inclination a1 of the outlet 117 may be greater than the inclination a2 of the rear end 113 of the first tower 110.

The second outlet 127 may be formed to be symmetrical left and right with respect to the first outlet 117, and the description of the second outlet 127 may be equally applied to the description of the first outlet 117. Accordingly, the second outlet 127 and the rear end 123 of the second tower 120 may be formed to be inclined with respect to the vertical direction V, and the inclination a1 of the second outlet 127 may be formed to be greater than the inclination a2 of the rear end 123 of the second tower 120.

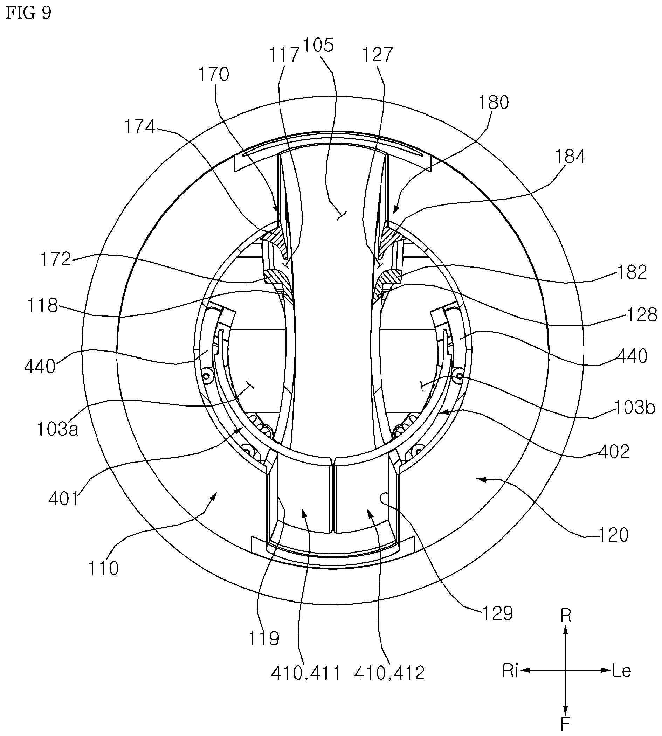

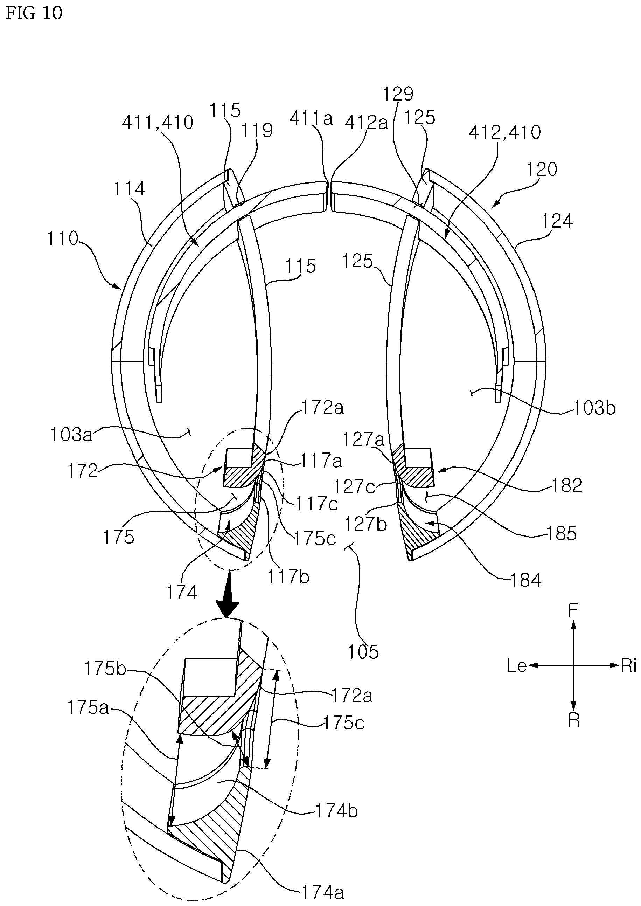

Hereinafter, the structure for inducing the Coanda effect in the blowing space 105 and the structure for inducing the Coanda breaker 400 for switching the flow direction of air discharged through the outlets 117 and 127 will be described with reference to FIGS. 9 and 10.

The first outlet 117 of the first tower 110 may be formed to face the second tower 120, and the second outlet 127 of the second tower 120 may be formed to face the first tower 110.

The air discharged from the first outlet 117 flows along the inner side wall 115 of the first tower 110 by the Coanda effect. The air discharged from the second outlet 127 flows along the inner side wall 125 of the second tower 120 by the Coanda effect.

The towers 110 and 120 of the blower 1 may further include a first discharge case 170 and a second discharge case 180. Although not illustrated, the first discharge case 170 may be manufactured in the form of an inner case disposed inside the first tower 110, and the air guide (not illustrated) may be disposed inside the first discharge case 170. The second discharge case 180 may also be manufactured in the form of an inner case disposed inside the second tower 120, and the air guide (not illustrated) may be disposed inside the second discharge case 180.

When the first discharge case 170 and the second discharge case 180 are manufactured in the form of the inner case, the air from the ventilation space 102 may be directly delivered.

The first outlet 117 may be formed in the first discharge case 170, and the first discharge case 170 may be assembled to the first tower 110. The second outlet 127 may be formed in the second discharge case 180, and the second discharge case 180 may be assembled to the first tower 120.

The first discharge case 170 may be installed to penetrate through the inner side wall 115 of the first tower 110, and the second discharge case 180 may be installed to penetrate through the inner side wall 125 of the second tower 120.

The first tower 110 may be provided with a first discharge opening 118 in which the first discharge case 170 is installed, and the second tower 120 may be provided with a second discharge opening 128 in which the second discharge case 180 is installed.

The first discharge case 170 may include a first discharge guide 172 that forms the first outlet 117 and is disposed on the air discharge side of the first outlet 117 and a second discharge guide 174 that forms a first outlet 117 and is disposed to be spaced apart from the first discharge guide 172.

Outer side surfaces 172a and 174a of the first discharge guide 172 and the second discharge guide 174 may form a part of the inner side wall 115 of the first tower 110.

The inner side of the first discharge guide 172 communicates with the first discharge space 103a, and the outer side thereof communicates with the blowing space 105. The inner side of the second discharge guide 174 communicates with the first discharge space 103a, and the outer side thereof communicates with the blowing space 105.

The outer side surface 172a of the first discharge guide 172 may be formed as a curved surface, and the outer side surface 172a may form a continuous surface with the first inner side wall 115.

An outer side surface 174a of the second discharge guide 174 may form a continuous surface with the first inner side wall 115, and an inner side surface 174b of the second discharge guide 174 is formed as a curved surface. The inner side surface 174b may form a continuous curved surface with the inner side surface of the first outer side wall 115, and by such a structure, the air in the first discharge space 103a may be guided to flow toward the first discharge guide 172.

The first outlet 117 may be formed between the first discharge guide 172 and the second discharge guide 174, and the air in the first discharge space 103a may be discharged to the blowing space 105 through the first outlet 117.

Specifically, the air in the first discharge space 103a may be discharged between the outer side surface 172a of the first discharge guide 172 and the inner side surface 174b of the second discharge guide 174, and a separation distance between the outer side surface 172a of the first discharge guide 172 and the inner side surface 174b of the second discharge guide 174 may be defined as a discharge interval 175. The first discharge guide 172 and the second discharge guide 174 form a predetermined channel.

In the discharge interval 175, a width of an intermediate portion 175b may be narrower than that of an inlet 175a and an outlet 175c. The intermediate portion 175b is defined as a shortest distance between the second border 117b and the outer side surface 172a.

A cross-sectional area of the discharge interval 175 may be gradually narrowed from the inlet 175a to the intermediate portion 175b, and the cross-sectional area may increase again from the intermediate portion 175b to the outlet 175c. The intermediate portion 175b may be located inside the first tower 110, and when viewed from the outside, the outlet 175c of the discharge interval 175 may be seen as the outlet 117.

In order to induce the Coanda effect, a radius of curvature of the inner side surface 174b of the second discharge guide 174 may be larger than that of the outer side surface 172a of the first discharge guide 172.

A center of curvature of the outer side surface 172a of the first discharge guide 172 is located in front of the outer side surface 172a and is formed inside the first discharge space 103a. The center of curvature of the inner side surface 174b of the second discharge guide 174 is located on the side of the first outlet 117 and is formed inside the first discharge space 103a.

The second discharge case 180 includes a first discharge guide 182 that forms the second outlet 127 and is disposed on the air discharge side of the second outlet 127, and a second discharge guide 184 that forms the second outlet 127 and a second discharge guide 184 disposed to be spaced apart from the first discharge guide 182, and a discharge interval 185 is formed between the first discharge guide 182 and the second discharge guide 184.

The second discharge case 180 may be disposed to be symmetrical left and right with respect to the first discharge case 170, and the description of the first discharge case 170 may be equally applied to the second discharge case 180.

The blower 1 may further include the Coanda breaker 400 (airflow converter) for switching the flow direction of air flowing in the blowing space 105.

The Coanda breaker 400 may switch the horizontal airflow of air flowing in the blowing space 105 into the upward airflow.

The Coanda breaker 400 includes a first Coanda breaker 401 disposed on the first tower 110 and a second Coanda breaker 402 disposed on the second tower 120. The first Coanda breaker 401 and the second Coanda breaker 402 may be disposed symmetrically left and right, and may have the same configuration.

The Coanda breaker 400 includes a guide board that is disposed on the towers 110 and 120 and protrudes toward the blowing space 105, a guide motor 420 that provides a driving force for movement of the guide board 410, a power transmission member (not illustrated) that transmits a driving force generated from the guide motor 420 to the guide board 410, and a board guider 440 that is disposed inside the towers 110 and 120 and guides the movement of the guide board 410.

The guide board 410 may be hidden inside the towers 110 and 120, and at least a portion thereof may protrude into the blowing space 105 when the guide motor 420 operates.

The guide board 410 includes a first guide board 411 that is disposed on the first tower 110, and a second guide board 412 that is disposed on the second tower 120.

The board slit 119 penetrating through the inner side wall 115 of the first tower 110 and the board slit 129 penetrating through the inner side wall 125 of the second tower 120 are respectively formed so that the guide board 410 may protrude to the blowing space 105.

The board slit 119 formed in the first tower 110 is referred to as the first board slit 119, and the board slit formed in the second tower 120 is referred to as the second board slit 129.

The first board slit 119 and the second board slit 129 may be formed to be symmetrical left and right, and the first board slit 119 and the second board slit 129 may be formed to extend long in the up-down direction. The first board slit 119 and the second board slit 129 may be disposed to be inclined with respect to the vertical direction V.

The front end 112 of the first tower 110 may be formed at an inclination of 3°, and the first board slit 119 may be formed at an inclination of 4°. The front end 122 of the second tower 120 may be formed at an inclination of 3°, and the second board slit 129 may be formed at an inclination of 4°.

The guide board 410 may be formed in a flat or curved plate shape, may be formed to extend long in the up-down direction, and may be disposed in front of the blowing space 105.

The guide board 410 may block the horizontal airflow of the air flowing in the front of the blower 1 through the blowing space 105, and may switch the air flowing in the blowing space 105 to flow in the upward direction.

An inner side end 411a of the first guide board 411 and an inner side end 412a of the second guide board 412 are in contact with or close to each other to block air flowing toward the front of the blower 1 and guide the air to flow upward. Alternatively, a single guide board 410 may be in close contact with the opposite tower to perform the above-described function.

When the Coanda breaker 400 does not protrude to the blowing space 105, the inner end 411a of the first guide board 411 may close the first board slit 119, and the inner side end 412a of the second guide board 412 may close the second board slit 129.

When the Coanda breaker 400 operates and protrudes to the blowing space 105, the inner side end 411a of the first guide board 411 passes through the first board slit 119 and protrudes to the blowing space 105, and the inner side end 412a of the second guide board 412 may penetrate through the second board slit 129 and protrude to the blowing space 105.

The first guide board 411 and the second guide board 412 may protrude to the blowing space 105 through a rotation operation. Alternatively, at least one of the first guide board 411 and the second guide board 412 may linearly move in a slide manner and protrude to the blowing space 105.

When viewed from a top view, the first guide board 411 and the second guide board 412 may have an arc shape. The first guide board 411 and the second guide board 412 form a predetermined radius of curvature, and the center of curvature is located in the blowing space 105.

The board guider 440 may be assembled to the outer side walls 114 and 124 of the towers 110 and 120. The board guider 440 may be disposed radially outward with respect to the guide board 410, and by such a structure, frictional resistance generated in the air flowing in the discharge space 103 may be reduced.

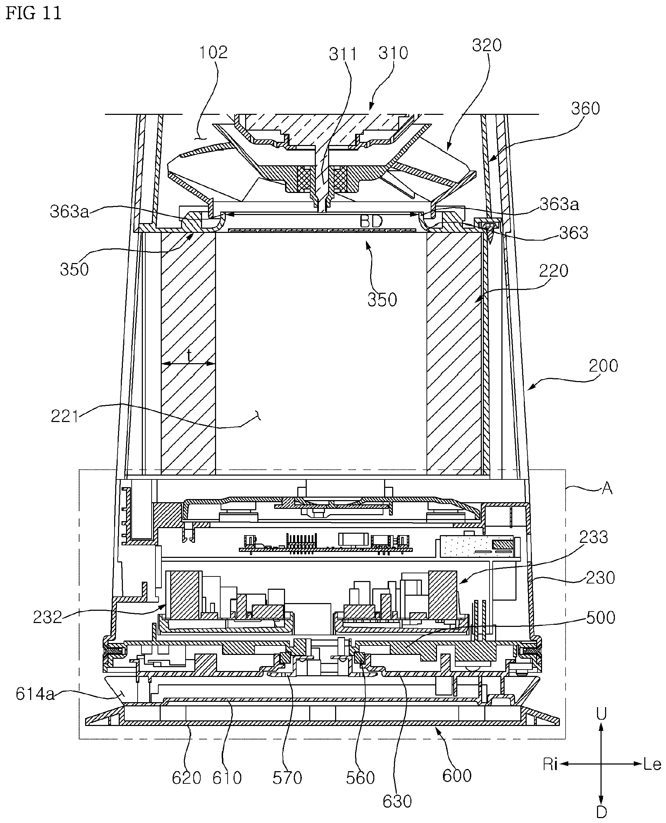

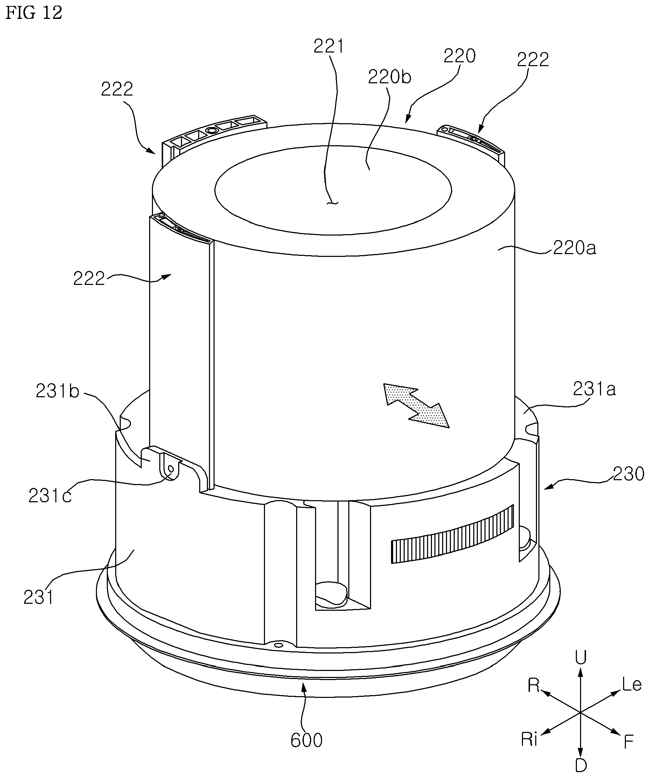

Hereinafter, the internal structure of the blowing unit 200 will be described with reference to FIGS. 11 and 12.

The fan housing 360 may include a bell mouth 363 that guides air passing through the filter 220 to the fan 320.

The bell mouth 363 may be disposed above the filter 220, and the suction grill 350 may be disposed between the filter 220 and the bell mouth 363.

The bell mouth 363 may have a ring shape having a predetermined inner diameter BD, and the inner side may be open in an up-down direction. The inner diameter BD may be understood as a diameter of an inner circumferential surface 363a of the bell mouth 363, and an air flow path toward the fan 320 may be formed inside the bell mouth 363.

The fan 320 connected to the rotation shaft 311 generates suction force with respect to the air in the filter hollow 221 by rotation, and the air in the filter hollow 221 flows into the fan housing 360 through the suction grill 350 and the bell mouth 363.

The filter 220 may have a cylindrical shape in which the filter hollow 221 is formed, and the air introduced into the lower case 210 through the air inlet 211 may pass through the outer circumferential surface 220a and the inner circumferential surface 220b of the filter 220 and flow into the filter hollow 221. The introduced air may flow from the outer circumferential surface 220 to the inner circumferential surface 220b of the filter 220 and may flow into the hollow filter 221 in a state in which contained foreign substances are filtered out by a pre-filter, a HEPA filter, or a deodorizing filter disposed between the outer circumferential surface 220a and the inner circumferential surface 220b.

The filter 220 may be supported by a filter frame 222 that limits movement of the filter 220 in a radially outward direction. The filter frame 222 may extend in an up-down direction and may be in contact with the outer circumferential surface 220a of the filter 220. A plurality of filter frames 222 may be disposed to be spaced apart in the circumferential direction, and three filter frames 222 may be disposed. The filter 220 may be entered and exited through an area where the filter frame 222 is not disposed. The lower case 210 may be disposed to be detachable to the driving unit 700, and after removing the lower case 210, the user can take out the filter 220 and clean the filter 220.

The filter frame 222 may be connected to the substrate housing 230 disposed below the filter 220. The substrate housing 230 may be in contact with the lower surface of the filter 220 to support the filter 220. The substrate housing 230 may include a housing outer wall 231 that extends in the circumferential direction and is supported by the driving unit 700.

The housing outer wall 231 includes a housing outer wall upper surface 231a that extends in the circumferential direction, a frame connection part 231b that protrudes upward from the housing outer wall upper surface 231a, and a fastening hole 231c that is formed in the frame connection part 231b.

The filter frame 222 may be connected to the housing outer wall 231 through a predetermined fastening member (not illustrated) penetrating through the fastening hole 231c, and may be fixed by the substrate housing 230.

The driving unit 700 for rotating the blower 1 is disposed below the substrate housing 230. The driving unit 700 includes the base 600 in contact with the ground, and the rotating plate 500 that is rotatably disposed on the upper side of the base 600.

The substrate housing 230 may be disposed above the rotating plate 500, and the rotating plate 500 may rotate while supporting the loads of all of the rotating structures 100, 110, 120, 130, 140, 200, 210, 220, 230, and 300 disposed above the substrate housing 230, including the substrate housing 230.

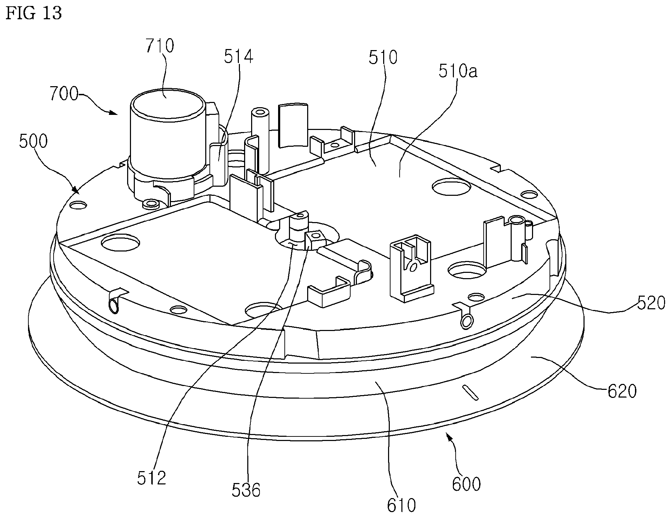

Hereinafter, the structure and operation of the rotating plate 500 and the base 600 according to an embodiment of the present disclosure will be described with reference to FIGS. 13 to 23.

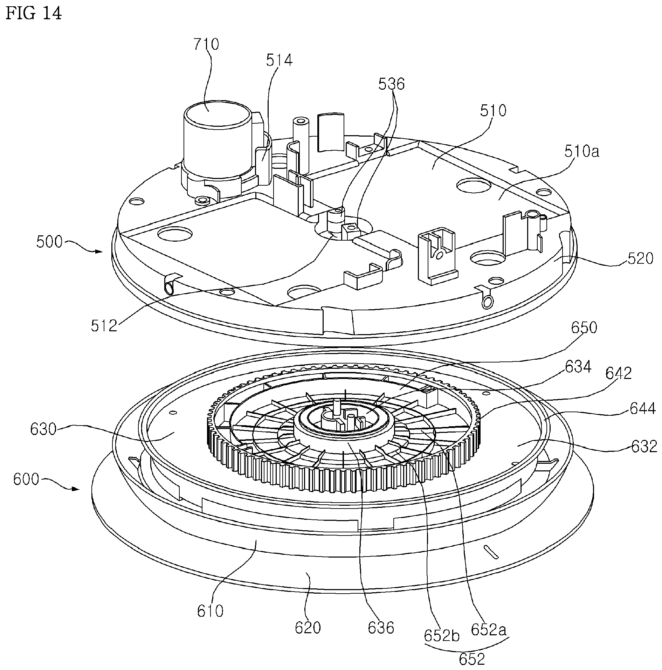

Referring to FIG. 14, the blower 1 includes the base 600, the rotating plate 500 connected to the case 100 and rotatably disposed above the base 600, and the driving unit 700 that rotates the rotating plate 500 above the base 600.

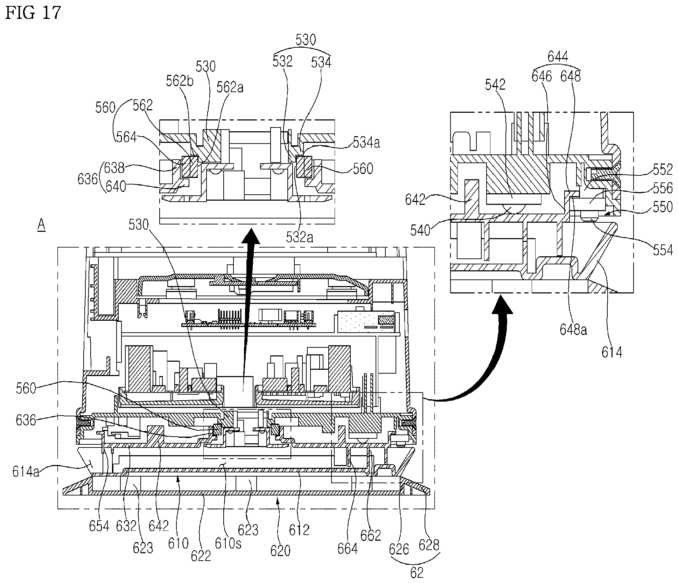

Referring to FIG. 17, the blower 1 includes a shaft bearing 560 that is disposed between the base 600 and the rotating plate 500 and supports the rotation of the rotating plate 500, and an electric wire holder 570 that is fixedly disposed on the rotating plate 500 and fixes the electric wires arranged above the rotating plate 500.

The rotating plate 500 is rotatably disposed above the base 600, and is supported by the base 600. When the rotating plate 500 is rotated, the base 600 supports normal stress and shear stress generated by all structures disposed above the base 600, including the rotating plate 500.

Referring to FIG. 13, the rotating plate 500 includes a plate 510, a circumferential cover 520 that extends downward from an outer circumference of the plate 510, and a shaft body 530 that is disposed at the center of rotation of the plate 510 and protrudes in the direction of the base 600, and supports the rotation of the plate 510.

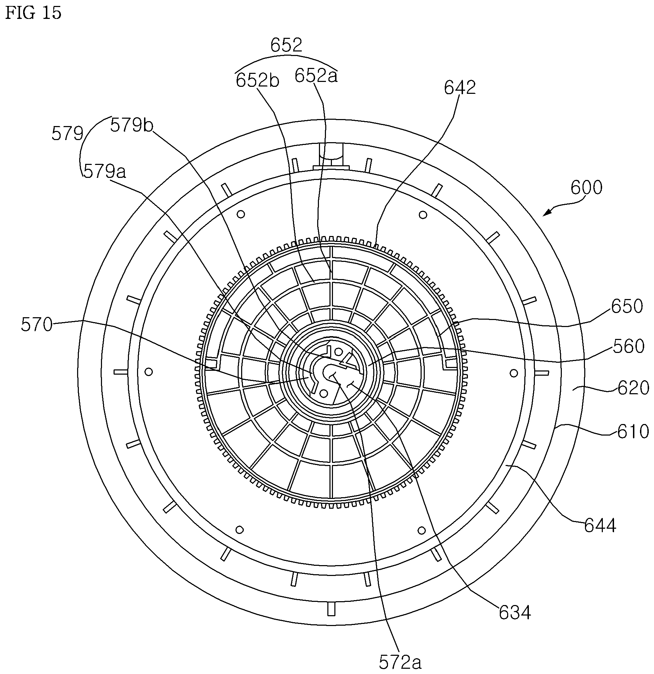

Referring to FIGS. 14 and 15, the plate 510 may have a disk shape as a whole, and a shaft through hole 512 is open in the up-down direction in the center. The rotating plate 500 has a shaft through-hole 512, which is open in the up-down direction, provided at the center where the shaft body 530 is formed. The electric wires to be described below may be arranged through the shaft through hole 512.

Referring to FIG. 13, the shaft body 530 extends downward from the plate 510. The shaft body 530 may have a hollow ring shape. A shaft through hole 512 is formed inside the shaft body 530. The shaft body 530 includes a first shaft body 532 forming the outer circumference of the shaft through hole 512 and a second shaft body 534 disposed on the outer circumference of the first shaft body 532. The first shaft body 532 protrudes further downward than the second shaft body 534. Accordingly, the first shaft body 532 and the second shaft body 534 are formed to be stepped to each other.

The outer circumferential surface 532a of the first shaft body 532 is disposed in contact with the inner circumferential surface 562a of the shaft bearing 560. The lower surface 534a of the second shaft body 534 may be disposed in contact with the upper surface 562b of the shaft bearing 560. Accordingly, the shaft bearing 560 may be stably disposed by the first shaft body 532 and the second shaft body 534.

Referring to FIG. 13, the overall outer shape of the shaft bearing 560 may be cylindrical, and a portion of the shaft body 530 may be penetrated inside the shaft bearing 560. Referring to FIG. 13, the first shaft body 532 is penetratingly disposed inside the shaft bearing 560.

Referring to FIG. 14, a pair of fastening parts 536 facing each other may be formed in the shaft through hole 512. The fastening part 536 may be fastened with a fastening member 537 such as an electric wire holder 570 and a bolt to be described below.

The fastening part 536 may be formed by partially inserting the central part into the shaft through hole 512. The fastening part 536 has a cylindrical shape extending in the up-down direction, and may be disposed to protrude into the shaft through hole 512.

Referring to FIG. 14, a motor mounting part 514 that fixes the driving motor 710 of the driving unit 700 is disposed on the upper surface of the plate 510. The motor mounting unit 514 may have a structure in which the driving motor 710 is seated. The driving motor 710 may be fastened to the rotating plate 500 through a separate fastening means (not illustrated) while seated on the motor mounting unit 514. The driving motor 710 may be disposed at a position radially spaced apart from the center of rotation of the plate 510.

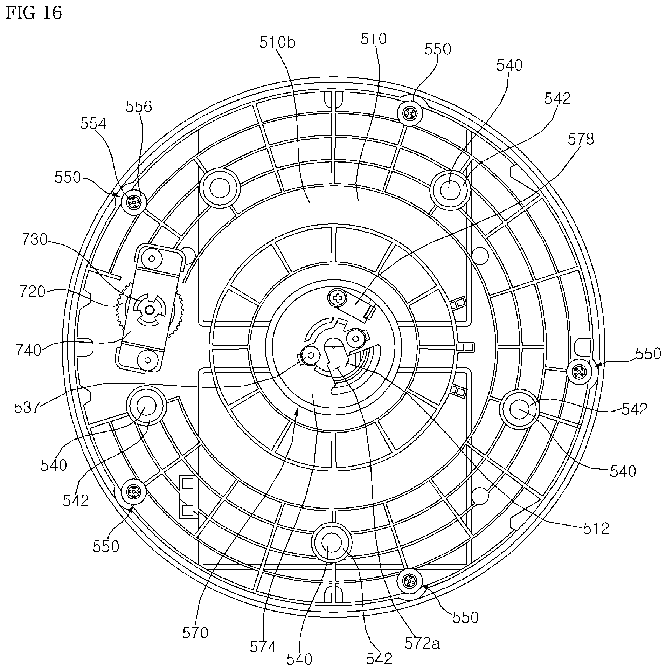

Referring to FIG. 16, a plurality of ball bearings 540 supporting a load applied to the rotating plate 500 are disposed on a lower surface 510b of the plate 510. The plurality of ball bearings 540 are disposed at positions spaced apart from the shaft body 530 in the radial direction.

The ball bearing 540 may be disposed radially outward than the base gear 642 of the base 600 to be described below. A bearing holder 542 for fixing the arrangement of the ball bearing 540 is disposed on the lower surface 510b of the plate 510. The bearing holder 542 is disposed to protrude from the lower surface 510b of the plate 510 in the direction in which the base 600 is disposed, and may fix the arrangement of the ball bearing 540.

The ball bearing 540 may have a spherical shape that can freely rotate in the bearing holder 542. The ball bearing 540 is disposed in contact with the upper portion of the base 600 disposed on the lower side. Therefore, when the rotating plate 500 rotates, the ball bearing 540 may contact the upper portion of the base 600 to distribute the load applied to the rotating plate 500.

Referring to FIG. 16, a plurality of ball bearings 540 are disposed on the lower surface 510b of the plate 510. The plurality of ball bearings 540 may be spaced apart from each other in the circumferential direction. Referring to FIG. 16, a plurality of ball bearings 540 are spaced apart from the center of rotation of the rotating plate 500 at the same intervals. However, this is according to one embodiment, and it is also possible that the plurality of ball bearings 540 are spaced apart from each other at different intervals from the center of rotation of the rotating plate 500.

Referring to FIG. 16, a plurality of support bearings 550 that prevents one side of the case 100 from being lifted from the base 600 are disposed on the lower surface 510b of the plate 510.

The plurality of support bearings 550 are radially spaced apart from the center of rotation of the rotating plate 500 rather than the plurality of ball bearings 540. The plurality of support bearings 550 may be disposed between an edge rib 644 of the base 600 and a circumferential cover 520 of the rotating plate 500 to be described below.

Referring to FIG. 13, the support bearing 550 includes a support protrusion 552 formed to protrude downward from the rotating plate 500, a support shaft 554 connected to the support protrusion 552, and a wheel 556 through which the support shaft 554 penetrates.

The support protrusion 552 may have an insertion hole (not illustrated) into which the support shaft 554 may be inserted, and the support shaft 554 may be inserted into the support protrusion 552 upward.

The support shaft 554 may support the wheel 556 and may use a screw or a pin. The support shaft 554 may be fixedly inserted into the support protrusion 552, and may support the wheel 556 so that the wheel 556 is not detached downward.

The wheel 556 may be rotatably disposed between the support protrusion 552 and the support shaft 554. The wheel 556 may use a roller, and the wheel 556 may be rotated using the support shaft 554 as a rotation shaft.

The wheel 556 may be disposed below the outer circumferential end of the upper body 630 of the base 600. The wheel 556 may be disposed below the outer rib 648 of the base 600 to be described below. Therefore, when the vibration or external force occurs in the case 100, the upper surface 556a of the wheel 556 comes into contact with the lower surface 648a of the outer rib 648 so that one side of the case 100 may be prevented from vibrating upward.

The wheel 556 may rotate with the support shaft 554 as the rotation shaft when the rotating plate 500 rotates and the wheel 556 contacts the outer rib 648 of the base 600. This may be expressed in another way that the wheel 556 rotates with the support shaft 554 as the rotation shaft and revolves around a rotation center O.

Referring to FIG. 13, the shaft bearing 560 is disposed to surround a first layer 562 that rotates integrally with the rotating plate 500, and a second layer 564 that is disposed to surround the first layer 562 and rotates integrally with the base 600.

The first layer 562 may be disposed radially inside the second layer 564, and an outer circumferential surface of the first layer 562 may be in contact with an inner circumferential surface of the second layer 564. The second layer 564 may be disposed radially inside the rotation shaft housing 636 of the base 600, and the outer circumferential surface of the second layer 564 may be in contact with the inner circumferential surface of the shaft body 530.

The first layer 562 may rotate together with the rotating plate 500. On the other hand, the second layer 564 may be fixedly disposed on the rotating shaft housing 515, and may not rotate even when the rotating plate 500 is rotated. The first layer 562 may support the rotation of the shaft body 530, and the second layer 564 may support the rotation of the first layer 562. Accordingly, lubricating oil may be injected between the first layer 562 and the second layer 564.

The shaft bearing 560 may be disposed on the rotating plate 500 to surround an outer circumferential surface 532a of the shaft body 530, and may be disposed on the base 600 to be fixed to an inner circumferential wall 638 of the rotary shaft housing 515.

The base 600 may be in contact with the ground and may be fixedly disposed on the ground. The base 600 may have the shape of a bowl forming a space in which electric wires are arranged. The base 600 may have a structure that prevents the entire structure of the blower 1 from being overturned.

Referring to FIG. 15, the base 600 may include a lower body 610 that forms an inner space 610s, an upper body 630 that is disposed above the lower body 610 and disposed above the inner space of the lower body 610, and a bottom body 620 that is disposed below the lower body 610 and is in contact with the ground.

Referring to FIG. 13, the entire appearance of the lower body 610 may be a bowl shape and the lower body 610 may form the inner space 610s.

The lower body 610 may include a lower plate 612 and a body outer wall 614 extending obliquely upward from the edge of the lower plate 612.

The overall appearance of the lower plate 612 may be a disk shape. The body outer wall 614 may extend in a circumferential direction and may be inclined outwardly in a radial direction. An electric wire hole 614a through which the electric wire 10 passes may be formed on one side of the body outer wall 614.

Referring to FIG. 13, the bottom body 620 may include a bottom plate 622 that is formed to be in contact with the ground, a support 624 that is disposed on the edge of the bottom plate 622 to prevent the blower 1 from overturning, and a fastening boss 623 that extends upward from the bottom plate 622 and is fastened to the lower plate 612.

The bottom plate 622 may be formed to have substantially the same size as the lower plate 612. The support 624 may have a structure inclined toward the floor from the edge of the lower plate 612 to prevent the overall structure of the blower 1 from overturning. The support 624 may be formed in an annular shape at the outer circumferential end of the bottom plate 622.

The support 624 includes an inner support 626 that extends upward from the edge of the bottom plate 622, and an outer support 628 which is inclined downward from the inner support 626. The inner support 626 may be disposed in contact with the edge portion of the lower plate 612 at the upper end portion. The outer support 628 may extend outward in the radial direction, and may be formed so that the outer circumferential end is in contact with the ground.

Referring to FIG. 15, the upper body 630 includes an upper plate 632, a rotating shaft housing 636 that is disposed in the center of the upper plate 632 and protrudes toward the rotating plate 500, an edge rib 644 that extends upward from the edge of the upper plate 632, and a base gear 642 that protrudes upward from the upper surface of the upper plate 632 and has a gear formed on one side to engage the driving unit 700.

The upper plate 632 may have a substantially disk shape. In the center of the upper plate 632, a shaft insertion hole 634 open in the up-down direction is formed. A rotating shaft housing 636 may be disposed around the shaft insertion hole 634.

Referring to FIG. 13, the overall outer shape of the rotary shaft housing 636 may be a cylindrical shape. The rotating shaft housing 636 may provide a space in which the shaft body 530 can be inserted. The rotation shaft housing 636 may be disposed to protrude upward from the upper plate 632. The rotating shaft housing 636 may include an inner circumferential wall 638 forming a space into which the shaft body 530 is inserted, and an inner protrusion 640 protruding radially inward from the lower end of the inner circumferential wall 638.

A shaft bearing 560 may be disposed inside the rotation shaft housing 636. The rotary shaft housing 636 supports the shaft bearing 560, thereby preventing the shaft bearing 560 and the shaft body 530 from being detached.

The inner circumferential wall 638 may be disposed to contact the outer circumferential surface of the second layer 564 of the shaft bearing 560. The inner protrusion 640 may support the lower portion of the shaft bearing 560. The upper surface of the inner protrusion 640 may contact the lower surface of the second layer 564 of the shaft bearing 560.

Referring to FIG. 15, the base gear 642 has a ring shape and may be disposed to protrude upward of the upper plate 632. The base gear 642 may have the same center as the rotation shaft housing 636, and may have a larger radius than the rotation shaft housing 636.

Referring to FIGS. 15 and 17, the base gear 642 may be formed with a gear engaging with the driving gear 720 of the driving unit 700 to be described below along the outer circumferential surface thereof. The base gear 642 may be fixedly disposed on the upper plate 632. Accordingly, the driving gear 720 may rotate along the outer circumferential surface of the base gear 642, and may rotate the rotating plate 500.

Referring to FIG. 13, the base gear 642 may be disposed between the rotation shaft body 530 and the edge rib 644. The base gear 642 may be disposed between the shaft bearing 560 and the ball bearing 540.

Referring to FIG. 13, the edge rib 644 has a structure extending upward from the edge of the upper plate 632. The edge rib 644 may prevent one side of the edge portion of the rotating plate 500 from being lifted upward in contact with the support bearing 550.

The edge rib 644 includes an annular vertical rib 646 that protrudes upward from the outer circumferential end of the upper plate 632, and an outer rib 648 that extends radially outward from the upper end of the vertical rib 646. The outer rib 648 may be disposed above the wheel 556 of the support bearing 550. Accordingly, when one edge of the rotating plate 500 moves upward, the upper surface 556a of the wheel 556 of the support bearing 550 and the lower surface 648a of the outer rib 648 may contact.

Referring to FIGS. 17 to 18A, the upper body 630 includes a gear support rib 650 that reinforces the rigidity of the base gear 642, a rigid rib 652 that reinforces the rigidity of the upper plate 632, an electric wire fixing protrusion 654 that fixes the electric wires arranged in the electric wire hole 614a of the lower body 610, and an electric wire guide rib 660 that prevents interference of the electric wire 10 arranged below the upper plate 632.

The gear support rib 650 protrudes upward from the upper plate 632, and is disposed inside the base gear 642. The gear support rib 650 may be connected to the inner circumferential surface of the base gear 642 to reinforce the rigidity of the base gear 642.

Referring to FIG. 17, the gear support rib 650 may be disposed in a partial region of the inner circumferential surface of the base gear 642. The gear support rib 650 may be disposed inside the base gear 642 in a range in which the driving gear 720 moves by the driving motor 710. However, as another embodiment, the gear support rib 650 may be disposed over the entire area of the inner circumferential surface of the base gear 642.

Referring to FIG. 17, the rigid rib 652 may be disposed above the upper plate 632. The rigid rib 652 may be disposed in a space between the base gear 642 and the rotation shaft housing 636. The rigid rib 652 includes a first rigid rib 652a that extends radially from the rotation shaft housing 636 and a second rigid rib 652b disposed in a ring shape having a larger radius than the rotation shaft housing 636.

Referring to FIG. 13, the electric wire fixing protrusion 654 protrudes to the lower side of the upper plate 632 at the portion where the electric wire hole 614a of the lower body 610 is formed. Accordingly, the electric wire fixing protrusion 654 may fix the electric wire passing through the electric wire hole 614a. Since the electric wire 10 also has a form mounted on the electric wire fixing protrusion 654, the position of the part mounted on the electric wire fixing protrusion 654 may be fixed. Accordingly, the length of the electric wire 10 exposed to the outside through the electric wire hole 614a may be prevented from increasing or decreasing.

The electric wire guide rib 660 is disposed on the lower surface of the upper plate 632. The electric wire guide rib 660 may prevent electric wires disposed between the lower body 610 and the upper body 630 from being disposed to interfere with each other.

One side of the electric wire 10 disposed between the lower body 610 and the upper body 630 is fixed to the electric wire fixing protrusion 654, and the other side thereof is fixed to the electric wire fixing member 578 of the electric wire holder 570. Accordingly, the length of the electric wire 10 disposed between the lower body 610 and the upper body 630 may be kept constant.

However, as the electric wire holder 570 rotates together with the rotating plate 500, the distance between the electric wire fixing member 578 and the electric wire fixing protrusion 654 of the electric wire holder 570 may vary, and thus, the arrangement of the electric wires 10 arranged between the body 610 and the upper body 630 may be changed. The electric wire guide rib 660 may fix the arrangement of a portion of the electric wires arranged between the lower body 610 and the upper body 630 to prevent the electric wires from interfering with each other.

The electric wire guide rib 660 is disposed to protrude downward from the lower surface of the upper plate 632.

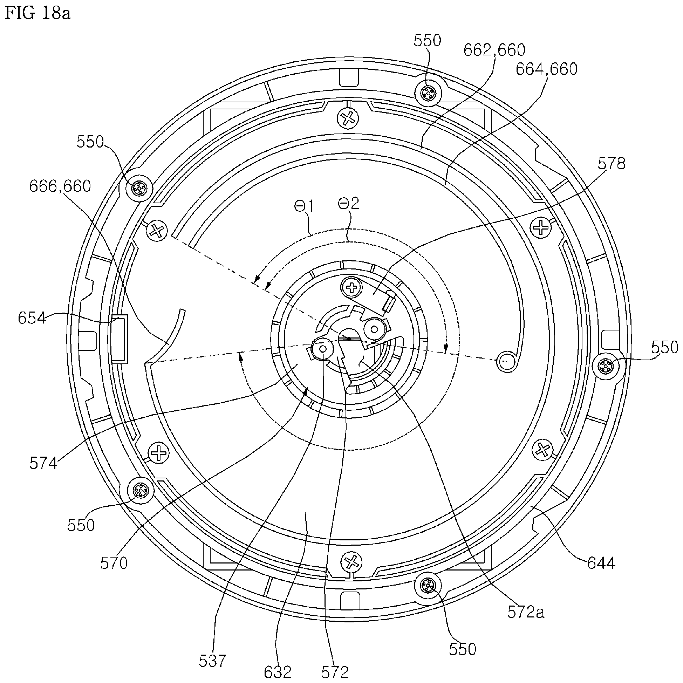

Referring to FIG. 18A, the electric wire guide rib 660 according to the first embodiment may include an outer guide rib 662, an inner guide rib 664, and an additional rib 666.

The outer guide rib 662 may have a ring shape with one side cut off. The outer guide rib 662 may have a cutout area in which the electric wire 10 is disposed in the area where the electric wire fixing protrusion 654 is disposed.

The inner guide rib 664 may be spaced apart from the outer guide ribs 662 in a radial direction. The inner guide rib 664 may be formed to be shorter than the outer guide rib 662.

The inner guide rib 664 may be formed in one configuration. The inner guide rib 664 may be divided into a first inner guide rib 664 having a constant spacing from the outer guide rib 662 and a second inner guide rib 664 having a larger spacing from the outer guide rib 662. The first inner guide rib 664 may be disposed in a region adjacent to the electric wire fixing protrusion 654.

The inner guide rib 664 and the outer guide rib 662 may have an arc shape. A central angle θ2 of the arc formed by the inner guide rib 664 is smaller than a central angle θ1 of the arc formed by the outer guide rib 662.

The additional rib 666 may be disposed between the electric wire fixing protrusion 654 and the rotation center of the upper plate 632. The additional rib 666 may extend from one end portion of the outer guide rib 662. The additional rib 666 extends in a direction in which the inner guide rib 664 is disposed, and extends in a direction adjacent to the rotation center of the upper plate 632 as it approaches the inner guide rib 664. The additional ribs 666 may prevent contact between the electric wires 10.

The additional rib 666 may be disposed between the electric wire fixing protrusion 654 and the center of rotation of the upper plate 632 to prevent the electric wire extending from the electric wire fixing protrusion 654 and the electric wire extending into the electric wire holder 570 from contacting each other.

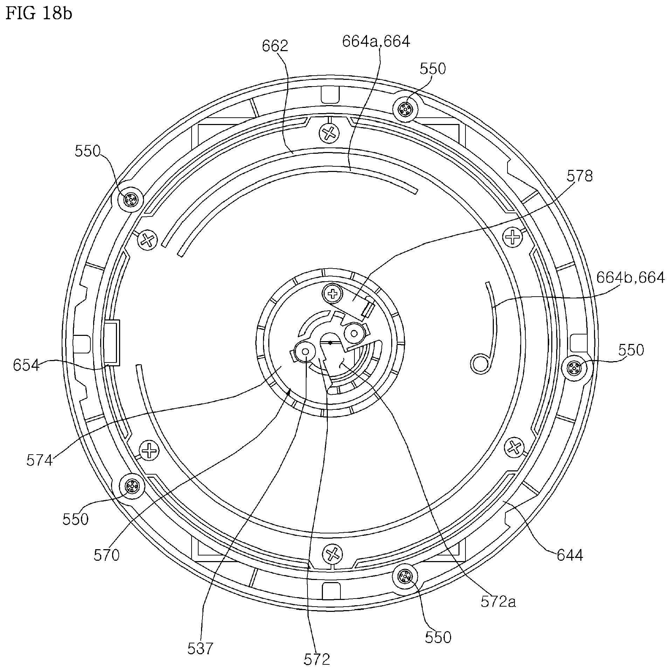

Referring to FIG. 18B, the electric wire guide rib 660 according to the second embodiment may include an outer guide rib 662 and an inner guide rib 664.

The outer guide rib 662 may have the same shape as the outer guide rib 662 according to the first embodiment.

A plurality of inner guide ribs 664 may be disposed to be spaced apart from each other in the circumferential direction.

The inner guide rib 664 includes the first inner guide rib 664a disposed adjacent to the electric wire fixing protrusion 654 and the second inner guide rib 664b disposed circumferentially spaced apart from the first inner guide rib 664. The first inner guide rib 664a may be formed parallel to the outer guide rib 662. The distance between the first inner guide rib 664a and the outer guide rib 662 may be kept constant. Accordingly, a portion of the electric wire disposed between the lower body 610 and the upper body 630 may be fixedly disposed between the outer guide rib 662 and the first inner guide rib 664a.

The second inner guide rib 664b may extend in a direction closer to the rotation center of the upper plate 632 as the distance from the first inner guide rib 664a increases. That is, the distance between the second inner guide rib 664b and the outer guide rib 662 may increase in a direction away from the first inner guide ribs 664a.

The electric wire holder 570 is fixed to the rotating plate 500 and rotates together with the rotating plate 500, and fixes the electric wire 10 from one side. The electric wire holder 570 includes an upper board 572 that is fixed to the rotating plate 500, a lower board 572 that is spaced apart upward from the upper board 572, and a connecting wall 576 that connects the upper board 572 and the lower board 574.

The upper board 572 is fixed to the shaft body 530 of the rotating plate 500. Referring to FIG. 13, the upper board 572 may be fastened to the fastening part 536 disposed inside the shaft body 530 by a fastening member 537. Accordingly, the electric wire holder 570 is fixedly disposed on the rotating plate 500, and may rotate together with the rotating plate 500.

The upper board 572 has an electric wire through hole 572a through which the electric wire passes.

A fastening rib 579 coupled to the fastening part 536 is disposed above the upper board 572. The fastening rib 579 protrudes upward from the upper surface of the upper board 572. The fastening rib 579 may form a groove into which the fastening part 536 is inserted, thereby fixing the disposition of the fastening part 536. When the fastening part 536 is inserted into the groove formed in the fastening rib 579, the fastening part 536 may be fastened to the electric wire holder 570 through a separate fastening member.

Referring to FIG. 15, the fastening rib 579 may include a first fastening rib 579a and a second fastening rib 579b spaced apart from the first fastening rib 579a. A fastening part 536 may be disposed between the first fastening rib 579a and the second fastening rib 579b.

The first fastening rib 579a and the second fastening rib 579b may have different shapes. This is according to the structure of the electric wire through hole 572a, and the first fastening ribs 579a and the second fastening ribs 579b may have a symmetrical shape.

The connecting wall 576 may have an approximately cylindrical shape. The connecting wall 576 may extend downward from the outer circumferential end of the upper board 572. The connecting wall 576 may be hollow inside.

The lower board 574 may have a structure extending radially outward from the lower end of the connecting wall 576. The lower board 574 is disposed below the upper plate 632. The upper plate 632 may be formed with a groove upward at a portion where the lower board 574 is disposed. The lower surface of the upper plate 632 and the upper surface of the lower board 574 may be disposed to be spaced apart from each other. Accordingly, the electric wire holder 570 may rotate stably without contacting the upper plate 632. An electric wire fixing member 578 that fixes one side of the electric wire 10 is disposed on the lower side of the lower board 574. The electric wire fixing member 578 may fix the arrangement of the electric wires under the lower board 574.

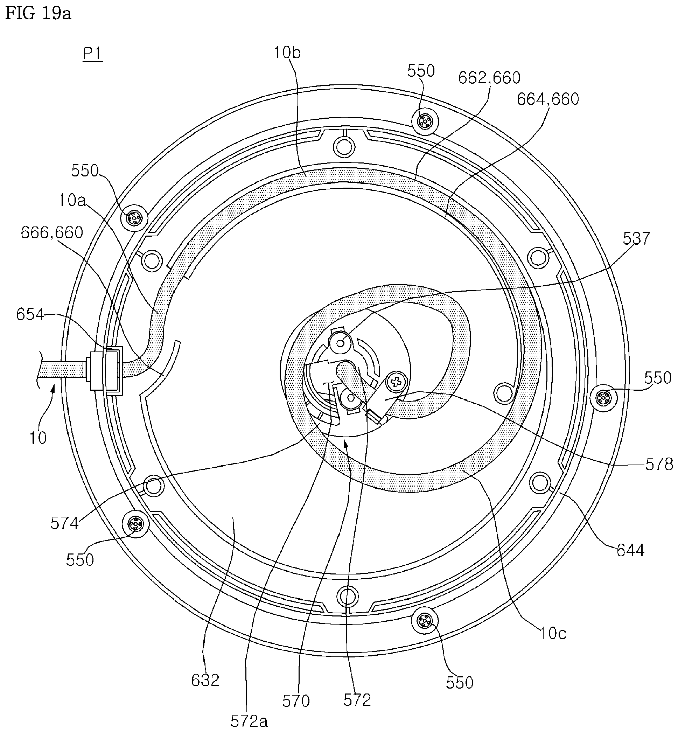

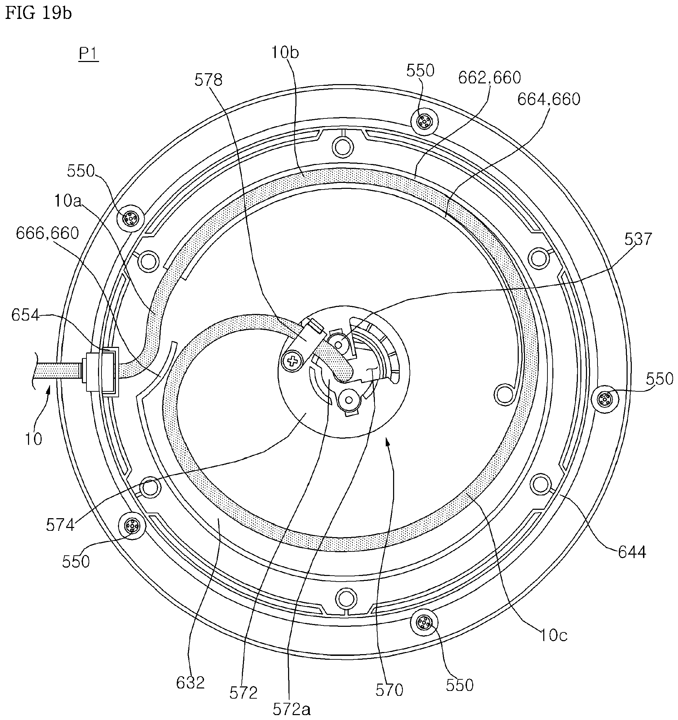

Referring to FIGS. 19A and 19B, the arrangement of the electric wires according to the rotation of the rotating plate 500 will be described.

Even if it is disposed in the first position P1 as illustrated in FIG. 19A or the second position P2 as illustrated in FIG. 19B, the arrangement of the electric wires 10 disposed between the outer guide rib 662 and the inner guide rib 664 may be fixed.

Referring to Figure 19A, the electric wire 10 disposed between the lower body 610 and the upper body 630 may be divided into a third electric wire 10a that extends from the electric wire fixing protrusion 654 to the outer guide rib 662, a first electric wire 10b that is disposed between the outer guide rib 662 and the inner guide rib 664, and a second electric wire 10c that extends from the first electric wire 10b to the electric wire holder 570.

Even if it is disposed at the first position P1 as illustrated in FIG. 19A or the second position P2 as illustrated in FIG. 19B, the arrangement of the third electric wire 10a and the first electric wire 10b may be fixed.

Referring to FIG. 19A, when the electric wire fixing protrusion 654 and the electric wire fixing member 578 are located at the first position P1 disposed at a distance, the electric wire fixing protrusion 654 and the end portion of the inner guide rib 664 are disposed adjacent to each other. Referring to FIG. 19A, when the electric wire fixing protrusion 654 and the electric wire fixing member 578 are located at the first position PI, the second electric wire 10c may be arranged to form an abrupt curvature in the direction in which the inner guide rib 664 is arranged. In this case, the inner guide rib 664 may prevent the second electric wire 10c and the first electric wire 10b from contacting each other.

Referring to FIG. 19B, when the electric wire fixing protrusion 654 and the electric wire fixing member 578 are located in the second position P2 disposed in a short distance, the electric wire fixing protrusion 654 and the end portion of the inner guide rib 664 may be disposed remotely. Referring to Figure 19B, when the electric wire fixing protrusion 654 and the electric wire fixing member 578 are located at the second position P2, the second electric wire 10c may be arranged to form a gentle curvature in a direction in which the electric wire fixing protrusion 654 is arranged. The additional ribs 666 may prevent the second electric wire 10c and the third electric wire 10a from contacting each other.

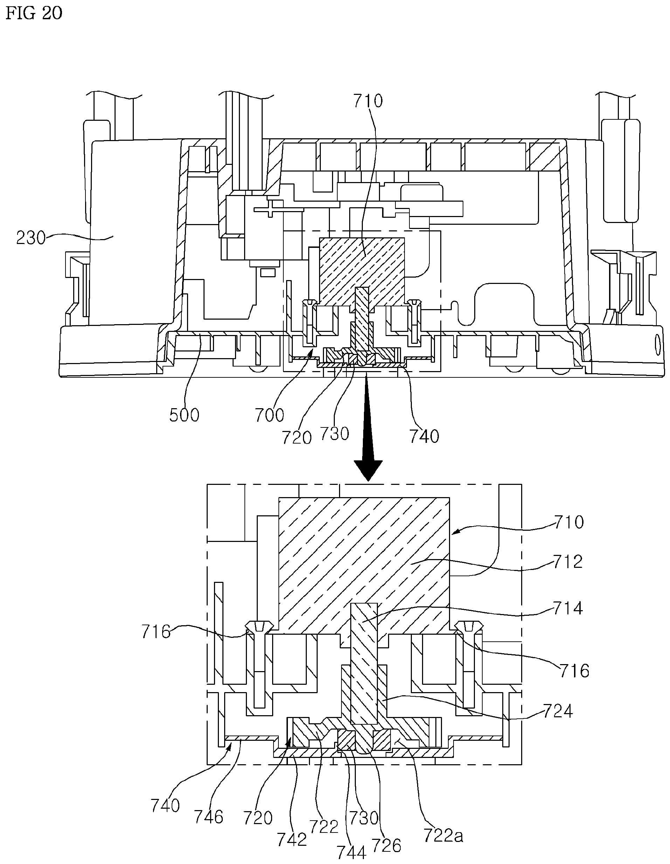

Referring to FIG. 20, the driving unit 700 may be disposed above and below the rotating plate 500 to minimize the space occupied by the driving unit 700 inside the blower 1.

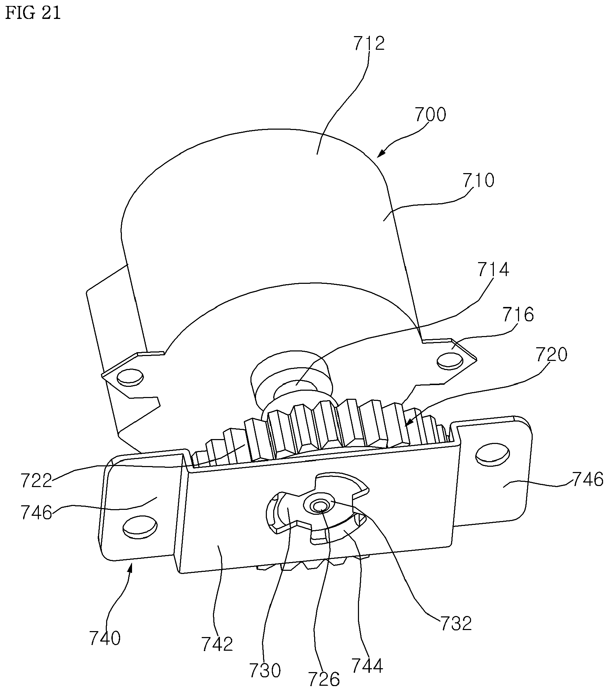

Referring to FIG. 21, the driving unit 700 includes a driving motor 710 that generates a driving force and rotates the driving shaft, a driving gear 720 that is connected to the driving shaft 714 to rotate and rotate the rotating plate 500, and a bracket 740 that supports the driving shaft 714 The driving unit 700 is disposed between the driving shaft 714 or the driving gear 720 and the bracket 740, and a gear bearing 30 that maximizes friction between the driving shaft 714 or the driving gear 720 and the bracket 740.

The driving motor 710 may be disposed above the rotating plate 500. A motor groove (not illustrated) open in the up-down direction may be formed in the rotating plate 500. The driving motor 710 may be fixedly disposed on the motor mounting part 514 that is disposed on the rotating plate 500. Accordingly, the driving motor 710 may be fixed to the rotating plate 500 and rotate together with the rotating plate 500. The driving motor 710 may be fixed to the motor mounting unit 514 of the rotating plate 500 and supported by the rotating plate 500.

The overall shape of the driving motor 710 may be a cylindrical shape.

The driving motor 710 includes a motor body 712 and a driving shaft 714 that extends from the motor body 712 and is connected to the driving gear 720.

The motor body 712 is fixed to the motor fastening part 536. The motor body 712 has a mass cylindrical shape, and a fastening protrusion 716 connected to the motor fastening part 536 is formed on one side.

The driving shaft 714 may rotate when the driving motor 710 operates. A driving gear 720 may be disposed at an end of the driving shaft 714. The driving shaft 714 is disposed to pass through a motor groove (not illustrated). The driving shaft 714 has a bar shape with a circular cross section. The driving shaft 714 may have a structure in which a portion has a straight surface at a portion connected to the driving gear 720. The driving shaft 714 may have a polygonal cross-section structure at a portion connected to the driving gear 720. Accordingly, the driving gear 720 may rotate together with the driving shaft 714 while being connected to the end portion of the driving shaft 714.

The driving gear 720 may be disposed below the rotating plate 500. The driving gear 720 may be a spur gear or a pinion gear.

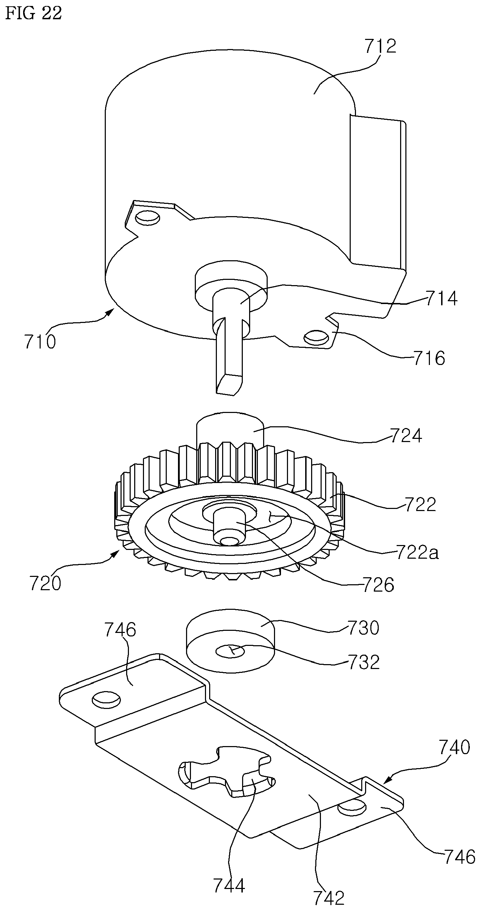

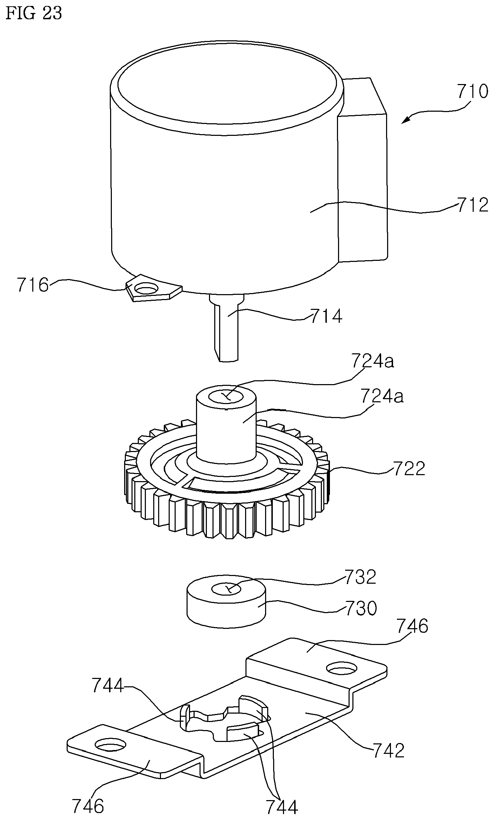

Referring to FIGS. 22 and 23, the driving gear 720 includes a gear plate 722 that is formed on the outer peripheral surface and has a disk shape, a gear boss 724 that extends from the center of the gear plate 722 in the direction of the driving motor 710 and has a shaft groove 724a into which the driving shaft 714 is inserted is formed, and a gear protrusion 726 that extends from the center of the gear plate 722 in the opposite direction to the gear boss 724 and is inserted into the center hole 732 of the gear bearing 730.

The gear boss 724 is connected to one end of the driving shaft 714 so that the driving gear 720 may rotate together with the driving shaft 714. The cross section of the shaft groove 724a formed inside the gear boss 724 may have the same shape as the cross section of the connecting end portion of the driving shaft 714.

The gear plate 722 may have a disk shape, and an outer circumferential surface thereof may have a gear shape engaging with the base gear 642.

A bearing groove 722a in which the gear bearing 730 is disposed may be formed at a lower portion of the gear plate 722.

The gear bearing 730 may be inserted into the bearing groove 722a to rotate. The gear bearing 730 may have a center hole 732 into which the gear protrusion 726 is inserted at the center of rotation.

One side of the gear bearing 730 may contact the driving gear 720, and the other side may contact the bracket 740. The gear bearing 730 may have a structure in which it rotates together with the driving gear 720 in a region in contact with the driving gear 720, and is fixed to the bracket 740 in an region in contact with the bracket 740.

The bracket 740 may be fixedly disposed on the rotating plate 500 to support the driving shaft 714. The bracket 740 may directly support the driving shaft 714 or indirectly support the driving shaft 714 through the driving gear 720 and the gear bearing 730.

Referring to FIGS. 22 and 23, the bracket 740 includes a fixing plate 746 that is fixed to the rotating plate 500 and a support plate 742 that supports the driving shaft 714. A pair of fixing plates 746 may be provided at both ends of the support plate 742. The fixing plate 746 may fix the bracket 740 to the rotating plate 500 through a separate fastening member (not illustrated) or the like. Therefore, when the rotating plate 500 rotates, the bracket 740 may also rotate.

The support plate 742 is disposed between a pair of fixing plates 746. The support plate 742 may form a step at a portion connected to the fixing plate 746 to form a space in which the driving gear 720 is disposed.

The support plate 742 includes a bearing shaft supporter 744 that supports the gear bearing 730 in contact with the outer peripheral surface of the gear bearing 730 and a bearing plate supporter 745 that is disposed under the gear bearing 730 to prevent external separation of the gear bearing 730. The bearing shaft supporter 744 protrudes from the support plate 742 in a direction in which the driving gear 720 is disposed. The bearing shaft supporter 744 may support the driving shaft 714.

The bearing shaft supporter 744 may contact the outer peripheral surface of the gear bearing 730 to prevent the gear bearing 730 from moving. This may prevent the movement of the driving gear 720 and the driving shaft 714 connected through the gear bearing 730.

The bearing plate supporter 745 is disposed below the gear bearing 730 to prevent the gear bearing 730 from being separated to the outside of the bracket 740. The bearing plate supporter 745 may be disposed to contact the lower surface of the gear bearing 730. The bearing plate supporter 745 is disposed perpendicular to the bearing shaft supporter 744.

When the rotating plate 500 rotates due to the operation of the driving motor 710, the overall structure of the blower 1 may rotate. In addition, when the rotation direction of the rotating plate 500 is changed by the operation of the driving motor 710, as the inertial force of the overall load of the blower 1 is different from the moving direction of the driving motor 710, a problem in which the driving shaft 714 is twisted may occur, but the bracket 740 may support the driving shaft 714 to solve the above problem.

The plurality of bearing shaft supporters 744 that are disposed to protrude from the support plate 742 may be provided. The plurality of bearing shaft supporters 744 may be disposed to be spaced apart from each other in the circumferential direction along the outer circumferential surface of the gear bearing 730.

Although the preferred embodiments of the present disclosure have been illustrated and described above, the present disclosure is not limited to the specific embodiments described above, and can be variously modified by those skilled in the art to which the present disclosure pertains without departing from the gist of the present disclosure claimed in the claims, and these modifications should not be understood individually from the technical ideas or prospects of the present disclosure.

**[Detailed Description of Main Elements]**

| | | | |
|---|---|---|---|
| 1: | Blower | 100: | Case |
| 110: | First tower | 120: | Second tower |
| 200: | Ventilation unit | 300: | Fan device |
| 400: | Coanda breaker | 500: | Rotating plate |
| 510: | Plate | 530: | Shaft body |
| 540: | Ball bearing | 550: | Support bearing |
| 560: | Shaft bearing | 570: | Electric wire holder |
| 600: | Base | 610: | Lower body |
| 620: | Bottom body | 630: | Upper body |
| 700: | Driving unit | | |

## Claims

1. A blower (1) comprising:
a base (600);
a case (100) disposed above the base (600) and provided with an inlet (211) and an outlet (117, 127);
a rotating plate (500) disposed below the case (100) and rotatably disposed on the base (600);
an electric wire (10), wherein a first part of the electric wire (10) is exposed to an outside of the base (600) and a second part extends upwards of the rotating plate (500) through the base (600); and
an electric wire holder (570) fixedly disposed on the rotating plate (500) and fixing one side of the electric wire (10) extending upwards of the rotating plate (500) from an inside of the base (600),
wherein the base (600) includes an electric wire fixing protrusion (654) that fixes the other side of the electric wire (10) extending from an outside to an inner space (610s) of the base (600) and an electric wire guide rib (660) that is configured to hold at least part of the electric wire (10) between the one side and the other side whose arrangement is changed in the inner space (610s) of the base (600) upon a movement of the rotating plate (500).

2. The blower of claim 1, wherein the base (600) includes a lower body (610) forming the inner space (610s) and an upper body (630) disposed above the inner space (610s), and
the electric wire guide rib (660) protruding in a direction towards the lower body (610) and is disposed on a lower surface of the upper body (630).

3. The blower of claim 1 or 2, wherein the electric wire guide rib (660) includes:
an outer guide rib (662) limiting a radial outward movement of the electric wire (10); and
an inner guide rib (664) limiting a radial inward movement of the electric wire (10), and formed shorter than the outer guide rib (662).

4. The blower of claim 3, wherein the outer guide rib (662) forms a cutout area in which the electric wire (10) is arranged in an area where the electric wire fixing protrusion (654) is disposed.

5. The blower of claim 3 or 4, wherein the inner guide rib (664) includes a first inner guide rib spaced apart from the outer guide rib (662) at a regular interval and a second inner guide rib having an enlarged spacing from the outer guide rib (662).

6. The blower of claim 5, wherein the second inner guide rib is disposed to be further spaced apart from the electric wire fixing protrusion (654) than the first inner guide rib.

7. The blower of claim 5 or 6, wherein the first inner guide rib and the second inner guide rib are spaced apart from each other in a circumferential direction.

8. The blower of any one of claims 3 to 7, further comprising an additional rib (666) disposed between the electric wire fixing protrusion (654) and a center of rotation of the upper body (630).

9. The blower of claim 8, wherein the additional rib (666) extends from one end portion of the outer guide rib (662).

10. The blower of any one of claims 3 to 9, wherein the electric wire (10) includes a first electric wire section (10a) fixed to the outer guide rib (662) and the inner guide rib (664), and a second electric wire section (10b) extending from the first electric wire section (10a) to the electric wire holder (570), and
a length of the second electric wire section (10b) is longer than that of the first electric wire section (10a).

11. The blower of any one of claims 2 to 10, wherein an electric wire hole (614a) through which the electric wire (10) passes is formed on one side of the lower body (610), and
the electric wire fixing protrusion (654) is disposed on the upper body (630) at a position where the electric wire hole (614a) is formed.

12. The blower of claim 1, wherein the electric wire holder (570) includes:
an upper board (572) fixed to the rotating plate (500) and having an electric wire through hole (572a) through which the electric wire (10) penetrates;
a lower board (574) spaced downward from the upper board (572); and
a connecting wall (576) connecting the upper board (572) and the lower board (574), and
an electric wire fixing member (578) for fixing one side of the electric wire (10) is disposed on the lower board (574).

13. The blower of claim 12, wherein a fastening rib (579) coupled to the rotating plate (500) is disposed above the upper board (572), and
in the electric wire holder (570), the upper board (572) is coupled to fastening part (536) with a fastening member in a state where the fastening part (635) is mounted on the fastening rib (579).

14. The blower of any one of claims 1 to 13, wherein a shaft bearing (560) supporting the rotation of the rotating plate (500) is disposed between the rotating plate (500) and the base (600), and
the electric wire holder (570) is fastened to the rotating plate (500) inside the shaft bearing (560).

15. The blower of any one of claims 1 to 14, further comprising:
a fan (300) disposed inside the case (100) and forming a flow of air from the inlet (211) to the outlet (117, 127);
a driving unit (700) mounted on the rotating plate (500) and in contact with the base (600) to relatively rotate the rotating plate (500) with respect to the base (600);
a control device (232, 233) disposed above the rotating plate (500) and electrically connected to the driving unit (700) and/or the fan (300).
